# EUROPÄISCHE PATENTANMELDUNG

(11) **EP 3 182 171 A1**
(43) Veröffentlichungstag der Anmeldung: **21.06.2017**
(21) Anmeldenummer: 15200231.7
(22) Anmeldetag: 15.12.2015
(51) Int. Cl.: G01V 3/12

(54) **VERFAHREN UND VORRICHTUNG ZUM LOKALISIEREN EINES PRÜFABSCHNITTS IN EINEM ROHRSYSTEM**

(71) Anmelder: Sprint Sanierung GmbH, 51061 Köln (DE)
(72) Erfinder: WARNKE, Björn, 34125 Kassel (DE)
(74) Vertreter: Rasch, Michael

(57) **Zusammenfassung**

Die Erfindung betrifft Verfahren zur Lokalisierung eines Prüfabschnitts eines wenigstens ein Rohr (12) umfassenden Rohrsystems (10), wobei in einen Eingang (14) des Rohrsystems (10) ein in dem Rohrsystem (10) verlagerbarer Pfropfen (18) oder eine darin verlagerbare Sonde mit einem daran befestigten flexiblen Zugmittel (20) oder flexiblen elektrischen Leiter (30) eingeführt wird, ein Druckgefälle durch Druckbeaufschlagen des zwischen dem Eingang (14) und dem Pfropfen (18) befindlichen Bereichs des Rohrsystems (10) mit einem gasförmigen Medium, und/oder durch Erzeugen eines Unterdrucks in dem zwischen dem Pfropfen (18) und einem Ausgang (16) befindlichen Bereichs des Rohrsystems erzeugt wird, beispielsweise über eine Vorrichtung zur Druckbeaufschlagung (28), und der Pfropfen (18) bzw. die Sonde in Richtung eines Ausgangs (16) transportiert wird. Anschließend wird, sofern der Pfropfen (18) bzw. die Sonde nicht bereits mit einem flexiblen elektrischen Leiter (30) verbunden ist, mittels des flexiblen Zugmittels (20) ein elektrischer Leiter (30) durch das Rohrsystem (10) gezogen. Ein flächiges Detektieren des Prüfabschnitts erfolgt mittels elektromagnetischer Wechselwirkung. Das Rohrsystem weist beispielsweise mehrere 90°-Bögen (22a, b, c, d), T-Stücke (24a, b, c) und/oder Öffnungen (26a, b, c, d, e) auf, wobei vorzugsweise genau eine Öffnung (26e) durch Verschließen der anderen Öffnungen (26a, b, c, d) als Ausgang bestimmt wird.

## Beschreibung

Die Erfindung betrifft Verfahren zum Lokalisieren eines Prüfabschnitts in einem Rohrsystem, sowie entsprechende Vorrichtungen zur Durchführung des Verfahrens.

In Gebäuden sind üblicherweise Rohrsysteme verbaut, die unterschiedlichen Zwecken dienen können. Beispielsweise handelt sich um Wasserleitungssysteme, um Trinkwasser zu einem Entnahmepunkt wie einem Wasserhahn oder einem Duschkopf leiten zu können, Abwassersysteme, die Abwässer beispielsweise von Ausgüssen oder Toiletten einer Kanalisation zuführen, Warmwasserleitungen für Heizungszwecke, oder auch Rohrleitungen zur Führung weiterer Leitungen, wie etwa Stromkabel oder Telekommunikationskabel. Die Rohrsysteme oder zumindest Teile davon sind oftmals hinter Oberflächen verbaut oder angeordnet, beispielsweise innerhalb von Wänden, Böden und/oder Decken der Gebäude. Rohrsysteme können sich weiterhin durchaus auch außerhalb von Gebäuden unter der Oberfläche des Bodens oder Erdbodens befinden, beispielsweise im Falle von Versorgungsleitungen, die zu einem Gebäude oder von diesem weg führen. In jedem Fall ist der Verlauf der Rohrsysteme von außen nicht sichtbar. Jedoch ist es manchmal erforderlich, den Verlauf eines Rohrsystems oder zumindest eines Teilabschnitts davon zu kennen, beispielsweise wenn Baumaßnahmen oder Sanierungsmaßnahmen bei solchen Oberflächen, wie beispielsweise Wänden, Böden oder Decken vorgenommen werden sollen oder Eingriffe in das Material der Wände, Böden oder Decken (nachfolgend ggf. zusammenfassend als "Wand" bezeichnet) erforderlich sind, beispielsweise für das Einbringen eines Dübels oder Nagels. Auch im Falle vermuteter Leckagen innerhalb eines Rohrsystems ist es erforderlich, dessen Verlauf zu kennen, um überhaupt abschätzen zu können, wo gegebenenfalls Reparaturen erforderlich sein könnten bzw. an welcher Stelle der Wand ein Zugang zum Rohrsystem geschaffen werden muss, um eine Reparatur durchzuführen. Die Kenntnis eines lediglich vermutlichen Verlaufs eines Rohrsystems ist für alle diese Fälle in der Regel nicht ausreichend, zumal Rohrabschnitte oftmals nicht geradlinig verlaufen, sondern auch Krümmungen aufweisen oder sich gegebenenfalls auch verzweigen können und dadurch von einem vermuteten Verlauf durchaus abweichen können. Dementsprechend kann ein Eingriff in einen Wandabschnitt, der aufgrund von Mutmaßungen über den möglichen Verlauf des Rohrsystems für rohrfrei gehalten wird, zu einer Beschädigung von Rohren und gegebenenfalls massiven Folgeschäden für die Wandkonstruktion und das Gebäude führen kann.

Für das Lokalisieren von hinter Oberflächen angeordneten Rohrsystemen sind nun verschiedene Maßnahmen bekannt, im einfachsten Fall ein Abklopfen eines Wandabschnitts und ein Lokalisieren über akustische Eigenschaften der Wand. Wenn ein Rohrsystem ausgeprägte metallische Eigenschaften aufweist, kann es mithilfe von Metalldetektoren geortet werden. Bei metallfreien Rohrsystemen oder solchen mit geringem Metallanteil wirft dieses Verfahren jedoch Probleme auf. Daher wurde vorgeschlagen, Sonden in Rohrsysteme einzuführen und somit ein Lokalisieren zu ermöglichen. Beispielsweise wird in der Patentschrift DD 266184 A1 eine Sendersonde beschrieben, die in ein Rohrsystem einführbar ist, wobei in einem Zusammenspiel zwischen einem Ortungssystem und der Sendersonde eine Lageortung und Tiefenbestimmung der Sonde innerhalb des Rohrsystems durchgeführt wird. In dieser Patentschrift werden jedoch keine Angaben zu dem Problem gemacht, wie das Einführen der Sendersonde in das Rohrsystem bzw. das Verlagern innerhalb des Rohrsystems erfolgen soll. Diesbezüglich stellen sich jedoch in der Praxis gravierende Probleme. Insbesondere wenn ein Rohrsystem mehrere Biegungen oder Verzweigungen aufweist, gestaltet sich ein kontrollierter Transport eines Gegenstands in einem Rohrsystem schwierig.

Die Aufgabe der Erfindung besteht nun darin, Verfahren und Vorrichtungen bereitzustellen, mittels derer ein Prüfabschnitt eines Rohrsystems lokalisiert werden kann, insbesondere ein Prüfabschnitt, der hinter einer Oberfläche angeordnet ist. Bei den Verfahren und Vorrichtungen soll insbesondere das Problem gelöst werden, wie Gegenstände, die im Zusammenhang mit dem Lokalisieren zum Einsatz kommen, in das Rohrsystem eingebracht und darin transportiert werden können.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe ist in einem ersten Aspekt gelöst durch ein Verfahren zum Lokalisieren eines hinter einer Oberfläche angeordneten Prüfabschnitts eines wenigstens ein Rohr umfassenden Rohrsystems. Dieses Verfahren umfasst ein Bereitstellen eines Eingangs in das Rohrsystem und eines Ausgangs aus dem Rohrsystem, weiterhin ein Einführen eines in dem Rohrsystem verlagerbaren Pfropfens mit einem daran befestigten flexiblen Zugmittel in den Eingang, weiterhin ein Erzeugen eines Druckgefälles durch Druckbeaufschlagen des zwischen dem Eingang und dem Pfropfen befindlichen Bereichs des Rohrsystems mit einem gasförmigen Medium, und/oder durch Erzeugen eines Unterdrucks in dem zwischen dem Pfropfen und einem Ausgang befindlichen Bereich des Rohrsystems, wodurch der Pfropfen bis zum Ausgang transportiert wird, weiterhin ein Befestigen eines zur Erzeugung oder Aufnahme eines elektromagnetischen Feldes befähigten flexiblen elektrischen Leiters entweder an dem am Eingang befindlichen Teil des flexiblen Zugmittels, oder an dem am Ausgang befindlichen Teil des Zugmittels oder am Pfropfen, weiterhin ein Ziehen des flexiblen elektrischen Leiters über das Zugmittel vom Eingang in Richtung des Ausgangs, falls der flexible elektrische Leiter an dem am Eingang befindlichen Teil des flexiblen Zugmittels befestigt wurde, oder vom Ausgang in Richtung des Eingangs, falls der flexible elektrische Leiter an dem am Ausgang befindlichen Teil des Zugmittels oder am Pfropfen befestigt wurde, weiterhin ein flächiges Detektieren des Prüfabschnitts des Rohrsystems mittels elektromagnetischer Wechselwirkung des darin verlaufenden flexiblen elektrischen Leiters.

Das Rohrsystem umfasst wenigstens ein Rohr, wobei in diesem Minimalfall ein gerades oder ein wenigstens eine Biegung aufweisendes Rohr zu Grunde gelegt werden kann. Üblicherweise jedoch umfasst das Rohrsystem mehrere Rohre, beispielsweise ein Hauptrohr, von dem ein oder mehrere Nebenrohre abzweigen. Manchmal ist es nicht erforderlich, den gesamten Verlauf des Rohrsystems zu kennen. Wenn beispielsweise eine Bohrung in eine Wand eingebracht werden soll und zu diesem Zweck vorher abgeklärt werden muss, ob in dem Wandabschnitt ein Rohr verläuft, ist es nicht erforderlich, den Verlauf des gesamten Rohrsystems, zu dem dieses Rohr gehört, zu kennen. Dementsprechend bezeichnet ein Prüfabschnitt im Sinne der vorliegenden Erfindung denjenigen Abschnitt, der mittels des Verfahrens lokalisiert werden soll.

Im Rahmen des Verfahrens wird nun ein Eingang in das Rohrsystem und ein Ausgang aus dem Rohrsystem bereitgestellt und ein in dem Rohrsystem verlagerbarer Pfropfen mit einem daran befestigten Zugmittel in den Eingang eingeführt.

Als bereitgestellter Eingang oder Ausgang kann ein bereits natürlicherweise vorhandener Eingang in das Rohrsystem verwendet werden. Beispielsweise kann dies im Falle eines Rohrsystems zum Führen von Telekommunikationsleitungen oder elektrischen Leitungen ein zu der Oberfläche führendes Ende des Rohrsystems mit entsprechender Öffnung sein, oder im Falle von Abwasserleitungen eine Abflussöffnung eines Waschbeckens, einer Dusch- oder Badewanne oder einer Toilettenschüssel. Sofern das entsprechende Rohrsystem beispielsweise spezialisierte Armaturen an einem oder beiden Enden aufweist, wie etwa Wasserhähne oder Armaturen im Falle von Wasserleitungen, kann bei geeignetem Querschnitt der Pfropfen direkt durch die Armaturen eingeführt werden, oder zunächst die Armaturen abmontiert und der Pfropfen dann in den Querschnitt des dadurch zugänglichen Rohrs des Rohrsystems eingeführt werden. Als weiteres Beispiel für einen Eingang oder Ausgang kann beispielsweise bei einem Rohrsystem an einer Stelle, die entfernt ist von dessen natürlichen Eingängen oder Ausgängen, ein Teilstück entfernt werden, beispielsweise ein kurzes Verbindungsstück, und dadurch ein künstlicher Eingang oder Ausgang bereitgestellt werden. Vorzugsweise kann dies an Stellen geschehen, an denen das Rohrsystem frei zugänglich ist, also nicht hinter einer Oberfläche angeordnet ist, sofern entsprechende Stellen für ein gegebenes Rohrsystem existieren.

Unter einem verlagerbaren Pfropfen wird ein Pfropfen verstanden, dessen Dimensionen und/oder Beschaffenheit derart sind, dass er in dem Rohrsystem nach Druckbeaufschlagung des Bereichs zwischen dem Eingang und dem Pfropfen verlagerbar ist. Beispiele für entsprechende Pfropfen sind solche aus komprimierbarem Schaumstoff, einem komprimierbaren Elastomer oder einem anderen komprimierbaren Material, wie etwa Wollknäuel, Faserknäuel oder Stoffballen, deren Durchmesser im unkomprimierten Zustand gegebenenfalls sogar größer sein können als der Durchmesser des kleinsten Rohrs in dem Rohrsystem, in das sie eingeführt werden sollen, solange der Pfropfen im komprimierten Zustand in das kleinste Rohr passt, durch das er geführt werden soll. Weitere Beispiele sind Pfropfen aus einem festen, nicht komprimierbaren Material mit einem Durchmesser, der minimal oder deutlich geringer ist als der Durchmesser des kleinsten Rohrs in dem Rohrsystem, in dem der Pfropfen verlagerbar sein soll, wobei gegebenenfalls insbesondere im Falle eines deutlich geringeren Durchmessers an der Oberfläche des Rohrs noch ein komprimierbares Dichtmaterial angeordnet ist, beispielsweise Fasern oder eine Hülle aus komprimierbarem Schaumstoff, um den Rohrquerschnitt durch den Pfropfen im Wesentlichen abzudichten. Durch die Abdichtung wird vorteilhaft vermieden, dass das unter Druck stehende gasförmige Medium, mit dem das Druckbeaufschlagen erfolgt, weitgehend zwischen dem Pfropfen und der Wand des Rohrs durchtritt und den Pfropfen somit nur ineffizient in dem Rohrsystem verlagert. Jedoch wurde überraschenderweise gefunden, dass auch Pfropfen mit Durchmessern, die deutlich kleiner sind als der Durchmesser des kleinsten Rohrs, beispielsweise 50-70 % des entsprechenden Durchmessers, ohne weiteres verwendbar sind, da sich diese Pfropfen bei entsprechender Druckbeaufschlagung sehr effizient innerhalb des Rohrsystems transportieren lassen. Für den Fall, dass das Rohrsystem Rohre mit unterschiedlichen Querschnitten aufweist, beispielsweise ein Hauptrohr mit großem Querschnitt, von dem Rohre mit geringerem Querschnitt abzweigen, und weiterhin vorgesehen ist, dass ein Prüfabschnitt zu lokalisieren ist, der auf ein abzweigendes Rohr mit geringerem Querschnitt entfällt, wird der Pfropfen gemäß einer Weiterbildung so dimensioniert, dass er im Wesentlichen auf das Rohr mit geringerem Querschnitt abgestimmt ist und somit problemlos in dieses Rohr eintreten kann. Der in diesem Fall dann etwas ineffizientere, gemäß den vorstehend gemachten Ausführungen jedoch immer noch durchführbare Transport in dem Hauptrohr mit größerem Querschnitt kann dadurch kompensiert werden, dass eine Beaufschlagung mit höherem Druck erfolgt, der gegebenenfalls nach Eintritt des Pfropfens in das abzweigender Rohr mit geringerem Querschnitt verringert werden kann.

Als flexibles Zugmittel kommt jedes Zugmittel infrage, das geeignet ist, dem Pfropfen folgend durch das Rohrsystem und gegebenenfalls dessen Biegungen oder Verzweigungen gezogen zu werden und anschließend genügend Zugkraft auszuhalten, um nach Befestigung des flexiblen elektrischen Leiters diesen durch das Rohrsystem zu ziehen. Beispiele für flexible Zugmittel sind Ketten, beispielsweise solche mit Kettengliedern aus Kunststoff oder Metall, insbesondere feingliedrige Ketten, bei denen die einzelnen Kettenglieder eine Größe von maximal 3 mm aufweisen, vorzugsweise jedoch Fasern, insbesondere Kunstfasern, wie etwa Fasern oder Zwirne aus synthetischen organischen oder anorganischen Polymeren. Beispiele für besonders bevorzugte Fasern sind solche aus organischen Polymeren, insbesondere Polyester oder Polypropylen, die eine gute Scheuerfestigkeit aufweisen, sich also kaum abnutzen oder beschädigt werden können, wenn sie durch das Rohrsystem gezogen werden, und weiterhin kaum Feuchtigkeit aufnehmen, was insbesondere vorteilhaft ist, wenn es sich bei dem Rohrsystem um ein Wasserleitungs- oder Abwasserrohrsystem handelt. Jedoch ist auch jedes andere Material geeignet, beispielsweise Polyamidfasern oder Kombinationen aus den vorgenannten Fasern, sofern daraus ein flexibles Zugmittel mit ausreichender Zugfestigkeit bereitstellbar ist, um letztendlich den flexiblen elektrischen Leiter durch das Rohrsystem zu ziehen. Besondere Beispiele für verwendbare flexible Zugmittel sind handelsübliche Drachenschnüre oder Angelschnüre, die bestimmungsgemäß ohnehin auf hohe Flexibilität, hohe Zugbelastbarkeit und Wasserwiderstandsfähigkeit ausgelegt sind.

Der Transport innerhalb des Rohrsystems wird durch ein Druckgefälle bewirkt, welches seinerseits durch ein Druckbeaufschlagen eines gasförmigen Mediums und/oder durch Erzeugen eines Unterdrucks bereitgestellt wird.

Das Druckbeaufschlagen des zwischen dem Eingang und dem Pfropfen befindlichen Bereichs des Rohrsystems kann mithilfe jeder geeigneten Vorrichtung erfolgen, mittels derer ein unter Druck stehendes gasförmiges Medium bereitstellbar ist. Beispielsweise kann es sich dabei um eine Gasflasche oder, in kleinerer Form, um eine Gaskartusche, oder um eine Pumpe handeln, die mit dem Eingang vorzugsweise leckfrei oder unter Inkaufnahme geringer Leckströme verbunden wird. Das gasförmige Medium strömt dann aus der Gasflasche oder Gaskartusche bereits unter erhöhtem Druck in den hinter dem eingeführten Pfropfen befindlichen Bereich, also den Bereich zwischen dem Eingang und dem Pfropfen, oder wird mittels der Pumpe auf erhöhten Druck gebracht und in den hinter dem eingeführten Pfropfen befindlichen Bereich eingeführt.

Alternativ oder zusätzlich wird ein Unterdruck in dem Teil des Rohrsystems, der sich zwischen dem Pfropfen und einem Ausgang befindet, erzeugt, beispielsweise durch Absaugen des in diesem Teil des Rohrsystems befindlichen gasförmigen Mediums, etwa mittels einer Pumpe.

Das Druckbeaufschlagen des zwischen dem Eingang und dem Pfropfen befindlichen Bereichs des Rohrsystems mit einem gasförmigen Medium und/oder das Erzeugen eines Unterdrucks in dem zwischen dem Pfropfen und einem Ausgang befindlichen Teil des Rohrsystems erzeugt ein Druckgefälle in dem Rohrsystem. Da der Pfropfen in dem Rohrsystem verlagerbar ist, folgt er dem Druckgefälle und wird in Richtung eines Ausgangs verlagert. Dabei zieht er das flexible Zugmittel hinter sich her. Nachdem der Pfropfen einen Ausgang des Rohrsystems erreicht hat, wird er entnommen. Das flexible Zugmittel erstreckt sich nun vom Eingang bis zum Ausgang des Rohrsystems. Dementsprechend kann nun entweder an dem am Eingang befindlichen Teil des flexiblen Zugmittels oder an dem am Ausgang befindlichen Teil des flexiblen Zugmittels bzw. dem am Ausgang befindlichen Pfropfen ein flexibler elektrischer Leiter befestigt werden. Anschließend wird der flexible Leiter mittels des Zugmittels vom Eingang in Richtung des Ausgangs gezogen, oder im umgekehrten Fall mittels des flexiblen Zugmittels oder des Pfropfens vom Ausgang in Richtung des Eingangs gezogen. Der flexible Leiter wird gemäß einer Weiterbildung vollständig bis zum Ausgang bzw. bis zum Eingang gezogen. Gemäß einer anderen Weiterbildung ist es ausreichend, wenn der flexible Leiter wenigstens bis zu einer Stelle innerhalb des Rohrsystems gezogen wird, die zwischen dem Eingang bzw. dem Ausgang und dem Ende des flexiblen elektrischen Leiters liegt. Ob eine derartige Stelle bereits erreicht wurde, kann beispielsweise durch Abschätzung der mutmaßlichen Länge des Rohrsystems und durch Messen der bereits in das Rohrsystem eingetretenen Länge des flexiblen Leiters zumindest näherungsweise abgeschätzt werden.

Das Lokalisieren des Prüfabschnitts erfolgt in an sich fachbekannter Weise mittels elektromagnetischer Wechselwirkung des im Rohrsystem verlaufenden flexiblen elektrischen Leiters. Dabei wird das Prinzip ausgenutzt, dass der flexible elektrische Leiter in der Lage ist, ein elektromagnetisches Feld zu erzeugen, beispielsweise durch Anlegen einer entsprechenden elektrischen Spannung oder durch Induzieren eines elektrischen Stromes, oder ein elektromagnetisches Feld aufzunehmen und in eine entsprechende Spannung bzw. einen Strom umzusetzen. Dementsprechend kann im erstgenannten Fall der Verlauf des flexiblen elektrischen Leiters durch Messung des von ihm erzeugten elektromagnetischen Feldes ermittelt werden. Im zweitgenannten Fall kann der Verlauf des flexiblen elektrischen Leiters ermittelt werden durch Induzieren einer elektrischen Spannung von jeweils unterschiedlichen Stellen aus, wobei die elektrische Spannung am effektivsten in der Nähe des flexiblen elektrischen Leiters induziert wird, so dass über die Position der Induktionsquelle auch die Position des flexiblen elektrischen Leiters ermittelbar ist.

Unter einem flächigen Detektieren wird verstanden, dass die Stärke der elektromagnetischen Wechselwirkung an verschiedenen Punkten der Oberfläche oder zumindest in Nähe der Oberfläche, hinter der sich der Prüfabschnitt befindet, detektiert wird. Dementsprechend handelt es sich bei dem Prüfabschnitt um einen Bereich, in dem eine Detektion vorgenommen wird. In einem häufigen Fall wird es sich bei der Oberfläche um eine Wand, eine Decke oder einen Boden handeln. Im Rahmen des Detektierens wird die elektromagnetische Wechselwirkung an verschiedenen Punkten der Wand, der Decke oder des Bodens bestimmt und aus der gemessenen Verteilung der Stärke der elektromagnetischen Wechselwirkung der Verlauf des flexiblen elektrischen Leiters innerhalb des Prüfabschnitts ermittelt. Somit wird indirekt über den flexiblen elektrischen Leiter der hinter der Oberfläche angeordnete Prüfabschnitt lokalisiert. Vorzugsweise erfolgt die Messung direkt an oder in unmittelbarer Nähe der Oberfläche, hinter der sich der Prüfabschnitt befindet, um für die verschiedenen Stellen, an denen gemessen wird, vergleichbare Rahmenbedingungen und eine möglichst große Nähe zum hinter der Oberfläche verlaufenden flexiblen elektrischen Leiter zu haben, also in einer zweidimensionalen oder im Wesentlichen zweidimensionalen Ebene, jedoch ist ein Messen in größerer Tiefe des Raums, und damit auch dreidimensional, beispielsweise entlang einer gekrümmten oder gewellten Ebene, von dem Erfindungsgedanken ebenfalls umfasst.

Gemäß einem zweiten Aspekt ist die Aufgabe unter weiterer Vereinfachung gelöst, indem man auf das flexible Zugmittel verzichtet, dessen Aufgabe in dem Verfahren gemäß dem ersten Aspekt darin besteht, einen flexiblen elektrischen Leiter durch das Rohrsystem zu ziehen, und stattdessen einen Pfropfen verwendet, an dem bereits ein flexibler elektrischer Leiter befestigt ist. Dementsprechend umfasst ein derartiges Verfahren zum Lokalisieren eines hinter einer Oberfläche angeordneten Prüfabschnitts eines wenigstens ein Rohr umfassenden Rohrsystems ein Bereitstellen eines Eingangs in das Rohrsystem und eines Ausgangs aus dem Rohrsystem, weiterhin ein Einführen eines in dem Rohrsystem verlagerbaren Pfropfens mit einem daran befestigten, zur Erzeugung oder Aufnahme eines elektromagnetischen Feldes befähigten flexiblen elektrischen Leiters in den Eingang, wobei die Länge des flexiblen elektrischen Leiters wenigstens der mutmaßlichen Distanz zwischen dem Eingang und dem Prüfabschnitt entspricht, weiterhin ein Erzeugen eines Druckgefälles durch Druckbeaufschlagen des zwischen dem Eingang und dem Pfropfen befindlichen Bereichs des Rohrsystems mit einem gasförmigen Medium, und/oder durch Erzeugen eines Unterdrucks in dem zwischen dem Problem und einem Ausgang befindlichen Bereich des Rohrsystems, wodurch der Pfropfen in Richtung eines Ausgangs transportiert wird, weiterhin ein flächiges Detektieren des Prüfabschnitts des Rohrsystems mittels elektromagnetischer Wechselwirkung des darin verlaufenden flexiblen elektrischen Leiters.

Geeignete Materialien für den flexiblen elektrischen Leiter sind alle Materialien, die elektrischen Strom leiten können, ausreichend flexibel sind, um einem gegebenenfalls gekrümmten Rohrsystem und gegebenenfalls dessen Verzweigungen zu folgen, und ausreichende Zugfestigkeit aufweisen, um durch das Rohrsystem gezogen zu werden. Entsprechende Materialien sind vom Fachmann in Kenntnis des hier offenbarten Erfindungsgedankens ohne weiteres zu bestimmen. Nicht beschränkte Beispiele dafür umfassen Kunststoffleiter und insbesondere metallische Leiter, wie beispielsweise metallische Drähte, wie etwa Kupferdrähte, Stahldrähte, insbesondere Stahldrähte aus rostfreiem Stahl, oder Drähte aus anderen Metallen oder Metalllegierungen. Die flexiblen elektrischen Leiter können einadrig oder mehradrig sein. Nicht beschränkende Beispiele für geeignete Dicken oder Durchmesser der flexiblen elektrischen Leiter sind, bezogen auf metallische Drähte, Bereiche von 0,05 mm bis 5,0 mm. Eher dickere flexible Leiter liegen beispielsweise in einem Bereich von insbesondere mehr als 0,3 mm bis 5,0 mm, wie etwa 0,4 mm bis 3,0 mm, beispielsweise 0,5 mm bis 2,5 mm oder 0,6 mm bis 2,0 mm, oder 0,8 mm bis 1,2 mm. Eher dünnere flexible Leiter liegen beispielsweise in einem Bereich von 0,05 mm bis 3,0 mm, wie etwa 0,08 mm bis 2,5 mm, oder 0,1 mm bis 2,2 mm, oder 0,15 mm bis 0,30 mm, oder 0,16 mm bis 0,20 mm. Insbesondere für ein Verfahren gemäß dem ersten Aspekt kommen eher dickere flexible Leiter zum Einsatz, da diese erst in einem zweiten Schritt mittels des flexiblen Zugmittels durch das Rohrsystem transportiert werden, sodass eine aufgrund des größeren Durchmessers geringere Flexibilität nicht ins Gewicht fällt. Umgekehrt kommen insbesondere für ein Verfahren gemäß dem zweiten Aspekt eher dünnere flexible Leiter zum Einsatz, da diese unter Umständen schnell mit dem Pfropfen durch das Rohrsystem transportiert werden und eine hohe Flexibilität somit vorteilhaft ist. Jedoch liegen keine absoluten Einschränkungen vor, sodass auch dünnere flexible Leiter im Rahmen des Verfahrens gemäß dem ersten Aspekt verwendet werden können bzw. eher dickere flexible Leiter im Rahmen des Verfahrens gemäß dem zweiten Aspekt. Der flexible elektrische Leiter kann ohne elektrisch isolierende Oberfläche oder mit elektrisch isolierender Oberfläche, beispielsweise einer entsprechenden Umhüllung, verwendet werden.

Hinsichtlich weiterer Ausführungen zu dem Bereitstellen des Eingangs und des Ausgangs, zu dem Pfropfen, zu dem Druckbeaufschlagen und/oder dem Erzeugen eines Unterdrucks, und zu dem flächigen Lokalisieren mittels elektromagnetischer Wechselwirkung wird auf die vorstehenden Ausführungen verwiesen, die gegebenenfalls auch auf nachfolgende Aspekte der vorliegenden Erfindung anwendbar sind.

Im Vergleich mit dem zuvor beschriebenen Verfahren gemäß dem ersten Aspekt wird durch das Verfahren gemäß dem zweiten Aspekt vorteilhaft ein Verfahrensschritt eingespart, da die Verwendung des flexiblen Zugmittels nun nicht mehr erforderlich ist. Dementsprechend verringern sich der der apparative Aufwand und der Zeitaufwand zur Durchführung des Verfahrens. Umgekehrt können beim Verfahren gemäß dem ersten Aspekt dickere Drähte verwendet werden, da diese sehr kontrolliert mittels des flexiblen Zugmittels durch das Rohrsystem gezogen werden können. Insbesondere bei Rohrsystemen mit einer großen Gesamtlänge kann die Verwendung eines dickeren Drahts aufgrund erhöhter Zugfestigkeit vorteilhaft sein.

Da bei dem Verfahren gemäß dem zweiten Aspekt der Pfropfen nun direkt den flexiblen elektrischen Leiter hinter sich her zieht, ist es vorteilhaft auch nicht mehr zwingend erforderlich, den Pfropfen durch das Druckgefälle bis zum Ausgang des Rohrsystems transportieren zu lassen. Im Grunde genommen muss der flexible elektrische Leiter lediglich eine Länge haben, die ausreicht, um den flexiblen elektrischen Leiter bis zum gewünschten Prüfabschnitt transportieren zu lassen. In der Praxis lässt sich eine solche Länge in der Regel durch grobe Schätzungen ermitteln. Gemäß einer besonderen Ausführungsform wird jedoch der Pfropfen bis zu einem Ausgang des Rohrsystems transportiert. Dadurch wird vermieden, dass der Pfropfen über den flexiblen elektrischen Leiter nach Beendigung des Verfahrens zum Eingang zurückgezogen werden muss. Vielmehr kann nach Entnahme des Pfropfens aus dem Ausgang der flexible elektrische Leiter auf im Vergleich dazu leichtere Art aus dem Rohrsystem gezogen werden.

Gemäß einer Ausführungsform des Verfahrens gemäß dem ersten Aspekt oder des Verfahrens gemäß dem zweiten Aspekt erfolgt das flächige Detektieren mittels elektromagnetischer Wechselwirkung über ein Erzeugen eines elektromagnetischen Feldes durch Anlegen einer elektrischen Spannung und/oder eines Induktionsstromes an den flexiblen Leiter, und über ein Detektieren des dadurch erzeugten elektromagnetischen Feldes mittels eines Detektors an wenigstens zwei Positionen.

Das elektromagnetische Feld kann erzeugt werden durch Anlegen einer Spannung an mindestens ein Ende des flexiblen elektrischen Leiters. Vorzugsweise wird jedoch aus Gründen der besseren Effizienz der flexible elektrische Leiter vom Eingang bis zum Ausgang gezogen. Anschließend wird die elektrische Spannung an beiden Enden des flexiblen elektrischen Leiters angelegt. In jedem Fall wird durch das Anlegen der elektrischen Spannung an den flexiblen elektrischen Leiter ein elektromagnetisches Feld erzeugt. Alternativ oder zusätzlich wird ein Induktionsstrom an den flexiblen elektrischen Leiter angelegt, was beispielsweise die Erzeugung eines elektromagnetischen Feldes ermöglicht, wenn der flexible elektrische Leiter eine elektrisch isolierende Oberfläche, beispielsweise eine Umhüllung, aufweist.

Durch ein Detektieren des elektromagnetischen Feldes an wenigstens zwei Positionen wird gemäß einem an sich fachbekannten Vorgehen ein Gradient des elektromagnetischen Feldes bestimmt. Je stärker das Feld ist, umso näher befindet sich in der Regel der Detektor an dem flexiblen elektrischen Leiter. Abweichungen davon können sich ergeben, falls zwischen dem flexiblen elektrischen Leiter unter Oberfläche je nach Position unterschiedliche Materialien angeordnet sind, die das elektromagnetische Feld unterschiedlich abschirmen, wobei jedoch der Verlauf des flexiblen elektrischen Leiters üblicherweise dennoch ausreichend genau bestimmbar ist. Durch ein Detektieren an wenigstens zwei Positionen lässt sich somit der Verlauf des elektrischen Leiters und damit der Prüfabschnitt des Rohrsystems hinter der Oberfläche lokalisieren. Vorzugsweise erfolgt das Detektieren an mehr als zwei Positionen, um ein genaueres flächiges Bild des Gradienten des elektromagnetischen Feldes zu gewinnen. Ein Detektieren des erzeugten elektromagnetischen Feldes mittels eines Detektors an wenigstens zwei Positionen umfasst im Rahmen der vorliegenden Erfindung die Möglichkeit, dass wenigstens zwei Detektoren an unterschiedlichen Positionen angebracht sind, vorzugsweise jedoch die Möglichkeit, dass ein und derselbe Detektor zum Detektieren zeitlich nacheinander an wenigstens zwei unterschiedliche Positionen gebracht wird. Gemäß einem fachbekannten Vorgehen kann das Einnehmen verschiedener Positionen kontinuierlich erfolgen, indem ein Detektor an oder über der Oberfläche, hinter welcher der Prüfabschnitt zu lokalisieren ist, hin- und herbewegt wird und der Gradient des elektromagnetischen Feldes damit ebenfalls kontinuierlich erfasst wird. Bei einem Hin- und Herbewegen entlang einer Linie, beispielsweise ungefähr senkrecht zum vermuteten Verlauf des Prüfabschnitts, wird ein im Wesentlichen eindimensionales Lokalisieren durchgeführt, was ausreichend sein kann, wenn der Prüfabschnitt ausreichend lokalisiert ist, sobald festgestellt ist, an welcher Stelle der abgefahrenen Linie sich der Prüfabschnitt befindet. In der Praxis wird üblicherweise jedoch neben dem Hin- und Herbewegen entlang einer Linie ein zumindest geringes Bewegen des Detektors in einer zweiten Richtung erfolgen, womit ein zweidimensionales Lokalisieren durchgeführt wird.

Bei dem elektromagnetischen Feld handelt es sich gemäß einer Weiterbildung um ein elektromagnetisches Gleichfeld, welches erzeugt wird durch Anlegen einer elektrischen Gleichspannung an den flexiblen elektrischen Leiter, gemäß einer anderen Weiterbildung um ein elektromagnetisches Wechselfeld, welches erzeugt wird durch Anlegen einer elektrischen Wechselspannung an den flexiblen elektrischen Leiter. Die Frequenz der Wechselspannung kann in einem weiten Bereich gewählt werden und innerhalb dieses Bereichs passend ausgewählt werden, um in Abhängigkeit von den Materialien, die zwischen dem flexiblen elektrischen Leiter unter Oberfläche angeordnet sind, eine optimierte Durchdringung des erzeugten elektromagnetischen Wechselfelds durch die jeweiligen Materialien zu gewährleisten (beispielsweise für den vorstehend genannten Fall, dass je nach Position unterschiedliche Materialien zwischen dem flexiblen elektrischen Leiter und der Oberfläche angeordnet sind) und/oder um Frequenzen zu verwenden, die entfernt sind von in der Umgebung auftretenden Störfrequenzen. Beispiele für Frequenzbereiche sind solche vom einstelligen Hertz-Bereich bis hin zum dreistelligen Kilohertz-Bereich, beispielsweise 1 Hz bis 120 kHz, wie etwa 5 Hz bis 99 kHz, beispielsweise 50 Hz, 128 Hz, 1 kHz, 8 kHz, 15 kHz, 33 kHz, oder 93 kHz. Das jeweilige elektromagnetische Feld kann über ein handelsübliches Messgerät detektiert werden. Beispielsweise lassen sich elektrische Gleichfelder über Elektrofeldmeter (auch Feldmeter genannt) nachweisen, und insbesondere für elektromagnetische Wechselfelder steht eine Vielzahl handelsüblicher Detektoren zur Verfügung, die gegebenenfalls auch in Kombination mit zugehörigen Wechselspannungsquellen zur Erzeugung eines elektromagnetischen Wechselfelds eingesetzt werden können.

Gemäß einer weiteren Ausführungsform des Verfahrens gemäß dem ersten Aspekt oder des Verfahrens gemäß dem zweiten Aspekt erfolgt das flächige Lokalisieren mittels elektromagnetischer Wechselwirkung über ein Induzieren einer elektrischen Wechselspannung im flexiblen elektrischen Leiter mittels eines elektromagnetischen Feldes zu unterschiedlichen Zeiten aus wenigstens zwei Positionen, und über ein Detektieren der jeweils im Leiter induzierten elektrischen Wechselspannung.

Mit abnehmender Entfernung der Quelle eines gleichbleibenden elektromagnetischen Feldes zum flexiblen elektrischen Leiter wird eine zunehmende Wechselspannung in diesem induziert. Wird daher die Quelle eines gleichbleibenden elektromagnetischen Feldes zu unterschiedlichen Zeiten an wenigstens zwei, vorzugsweise an mehr als zwei Positionen positioniert, so lässt sich durch Messung der im flexiblen elektrischen Leiter induzierten Wechselspannung ermitteln, welche Positionen der Quelle des elektromagnetischen Felds nahe am flexiblen elektrischen Leiter liegen, wodurch sich der Verlauf des flexiblen elektrischen Leiters bestimmen und damit der den flexiblen Leiter umgebende Prüfabschnitt des Rohrsystems lokalisieren lassen. Vorzugsweise wird die Quelle des elektromagnetischen Feldes an oder in der Nähe der Oberfläche angeordnet, hinter der sich der Prüfabschnitt befindet.

Gemäß einem dritten Aspekt ist die Aufgabe gelöst durch ein Verfahren zum Lokalisieren eines Prüfabschnitts eines wenigstens ein Rohr umfassenden Rohrsystems, umfassend ein Bereitstellen eines Eingangs in das Rohrsystem und eines Ausgangs aus dem Rohrsystem, weiterhin ein Einführen eines eine Sonde umfassenden und in dem Rohrsystem verlagerbaren Pfropfens mit einem daran befestigten flexiblen Zugmittel in den Eingang, weiterhin ein Erzeugen eines Druckgefälles durch Druckbeaufschlagen des zwischen dem Eingang und dem Pfropfen befindlichen Bereichs des Rohrsystems mit einem gasförmigen Medium, und/oder durch Erzeugen eines Unterdrucks in dem zwischen dem Pfropfen und einem Ausgang befindlichen Bereich des Rohrsystems, wodurch der Pfropfen in Richtung eines Ausgangs transportiert wird, und weiterhin ein flächiges Detektieren des Prüfabschnitts des Rohrsystems über eine Ortung der Sonde mittels elektromagnetischer Wechselwirkung. Bei der Ortung der Sonde wird deren Position innerhalb des Rohrsystems ermittelt, was wiederum ein Lokalisieren des Prüfabschnitts ermöglicht.

Hinsichtlich weiterer Angaben zu dem Bereitstellen des Eingangs und des Ausgangs, zu dem flexiblen Zugmittel, zu dem Druckbeaufschlagen und/oder dem Erzeugen eines Unterdrucks, und zu dem flächigen Lokalisieren mittels elektromagnetischer Wechselwirkung wird unter anderem auf die vorstehenden Ausführungen verwiesen. Die Ortung der Sonde mittels elektromagnetischer Wechselwirkung erfolgt vorzugsweise über ein Detektieren eines von der Sonde erzeugten elektromagnetischen Feldes. Bei dem Pfropfen handelt es sich gemäß einer Ausführung um einen Pfropfen wie im Rahmen des ersten Aspekts der Erfindung beschrieben, wobei die Sonde zu elektromagnetischer Wechselwirkung befähigt ist und mit dem Pfropfen verbunden ist. Gemäß einer Weiterbildung befindet sich die Sonde zwischen dem Pfropfen und dem flexiblen Zugmittel, welches dementsprechend über die Sonde indirekt an dem Pfropfen befestigt ist, gemäß einer anderen Weiterbildung ist die Sonde in den Pfropfen integriert. Der Pfropfen sorgt jeweils für eine wenigstens teilweise vorliegende Abdichtung gegenüber dem Rohr, in dem er sich bewegt, und somit durch einen Transport aufgrund des von dem gasförmigen Medium und/oder des Unterdrucks bewirkten Druckgefälles. Mittels des Zugmittels kann festgelegt werden, wie weit sich die Sonde innerhalb des Rohrsystems bewegen kann. Durch sukzessive Zugabe an verfügbarer Länge des flexiblen Zugmittels kann die Sonde nach und nach immer weiter in das Rohrsystem transportiert werden. Durch Ortung der Sonde an wenigstens einer Position, vorzugsweise an mehreren Zwischenpositionen, erfolgt das flächige Detektieren zum Lokalisieren des Prüfabschnitts.

Gemäß einer Ausführungsform umfasst die Sonde eine interne Stromversorgung und ist als Transmitter zur Erzeugung eines elektromagnetischen Feldes ausgebildet, wobei die Ortung der Sonde über ein Detektieren eines von der Sonde erzeugten elektromagnetischen Feldes erfolgt. Die Stromversorgung der Sonde erfolgt vorzugsweise über eine Batterie der Sonde oder einen wiederaufladbaren Akkumulator der Sonde. Das elektromagnetische Feld ist gemäß einer Weiterbildung ein elektromagnetisches Gleichfeld, gemäß einer anderen Weiterbildung ein elektromagnetisches Wechselfeld, wobei auf die zuvor gemachten Ausführungen Bezug genommen wird. Die Sonde kann so eingestellt werden, dass sie kontinuierlich ihr elektromagnetisches Feld erzeugt, oder zur Schonung der eigenen Stromversorgung intermittierend in gegebenenfalls wählbaren Abständen ihr elektromagnetisches Feld erzeugt, sodass eine längere Betriebsdauer ermöglicht wird oder eine Stromversorgung mit geringerer Kapazität ausreichend ist. Das Detektieren des von der Sonde erzeugten elektromagnetischen Feldes erfolgt im Rahmen des flächigen Detektierens an wenigstens zwei Positionen, wobei wiederum ein Gradient des von der Sonde erzeugten elektromagnetischen Felds erstellt wird, über den sich die Position der Sonde bestimmen lässt. Mittels der Ortung der Sonde lässt sich wiederum der Prüfabschnitt lokalisieren.

Gemäß einer alternativen Ausführungsform ist die Sonde als Transponder ausgebildet, wobei die Ortung der Sonde mittels eines von dem Transponder als Reaktion auf ein Abfragesignal erzeugtes elektromagnetisches Feld erfolgt. Das flächige Detektieren erfolgt ebenfalls über ein Detektieren des von der Sonde erzeugten elektromagnetischen Felds an wenigstens zwei Positionen, wobei wiederum ein Gradient des von der Sonde erzeugten elektromagnetischen Felds erstellt wird, über den die Position der Sonde sich bestimmen lässt. Zusätzlich oder alternativ erfolgt eine Ortung der Sonde, indem der Signalgeber für das Abfragesignal zeitlich nacheinander an unterschiedlichen Positionen angeordnet wird. Wird die Stärke des Abfragesignals so eingestellt, dass es nur innerhalb einer bestimmten Mindestentfernung beim Transponder eine Reaktion auslöst, so kann die Ortung der Sonde mindestens näherungsweise bereits dadurch erfolgen, dass der Signalgeber für das Abfragesignal nur dann ein elektromagnetisches Feld der Sonde auslöst, wenn er sich innerhalb der Mindestentfernung zum Transponder befindet.

Als Transponder kommen gemäß einer Weiterbildung passive Transponder zum Einsatz, die für die Erzeugung des elektromagnetischen Felds auf die Energie des Abfragesignals angewiesen sind. Gemäß einer anderen Weiterbildung kommen aktive Transponder zum Einsatz, wobei die Sonde eine Energieversorgung aufweist, beispielsweise eine interne Stromversorgung wie etwa eine Batterie oder einen Akkumulator, aus der oder dem sie die Energie für das elektromagnetische Feld bezieht.

Gemäß einem vierten Aspekt ist die Aufgabe gelöst durch ein Verfahren zum Lokalisieren eines Prüfabschnitts eines wenigstens ein Rohr umfassenden Rohrsystems, umfassend ein Bereitstellen eines Eingangs in das Rohrsystem und eines Ausgangs aus dem Rohrsystem, weiterhin ein Einführen eines eine Sonde umfassenden und in dem Rohrsystem verlagerbaren Pfropfens mit einem zur Stromversorgung der Sonde daran befestigten flexiblen Leiter in den Eingang, weiterhin ein Erzeugen eines Druckgefälles durch Druckbeaufschlagen des zwischen dem Eingang und dem Pfropfen befindlichen Bereichs des Rohrsystems mit einem gasförmigen Medium, und/oder durch Erzeugen eines Unterdrucks in dem zwischen dem Pfropfen und einem Ausgang befindlichen Bereich des Rohrsystems, wodurch der Pfropfen in Richtung eines Ausgangs transportiert wird, und weiterhin ein Lokalisieren des Prüfabschnitts des Rohrsystems über eine Ortung der Sonde mittels elektromagnetischer Wechselwirkung.

Im Vergleich zum dritten Aspekt der Erfindung wird das flexible Zugmittel durch einen flexiblen elektrischen Leiter ersetzt, mit dem sich wiederum bestimmen und/oder kontrollieren lässt, wie weit die Sonde innerhalb des Rohrsystems transportiert wird, wobei auf entsprechende, genauere Ausführungen im Rahmen des dritten Aspekts verwiesen wird. Darüber hinaus lässt sich der flexible elektrische Leiter vorteilhaft als Stromversorgung für die Sonde verwenden, welche somit nicht auf eine interne Stromversorgung angewiesen ist. Der flexible elektrische Leiter ist dementsprechend vorzugsweise ausgebildet als zweiadriger Leiter mit voneinander elektrisch isolierten Adern, die einen geschlossenen Stromkreis unter Einbeziehung der Sonde ermöglichen.

Gemäß einer Ausführungsform ist die Sonde als Transmitter zur Erzeugung eines elektromagnetischen Feldes ausgebildet ist, wobei die Ortung der Sonde durch ein Detektieren eines von der Sonde erzeugten elektromagnetischen Feldes erfolgt. Auf weitere Ausführungen im Rahmen des dritten Aspekts wird entsprechend verwiesen. Der flexible elektrische Leiter ist vorzugsweise abgeschirmt, um das von der Sonde erzeugte elektromagnetische Feld nicht zu stören. Alternativ unterscheidet sich das von der Sonde erzeugte elektromagnetische Feld in seiner Frequenz von dem von dem Leiter erzeugten elektromagnetischen Feld, sodass eine Ortung der Sonde ohne Störung durch das von dem Leiter erzeugte elektromagnetische Feld möglich ist.

Gemäß einer alternativen Ausführungsform ist die Sonde als Transponder ausgebildet, wobei die Ortung der Sonde mittels eines von dem Transponder als Reaktion auf ein Abfragesignal erzeugten elektromagnetischen Feldes erfolgt. Auf weitere Ausführungen, die im Rahmen des dritten Aspekts gemacht wurden, wird entsprechend verwiesen. Bei dem Transponder handelt es sich gemäß einer Weiterbildung wiederum um einen passiven Transponder, gemäß einer anderen Weiterbildung um einen aktiven Transponder, der nunmehr die Energie für das als Reaktion auf ein Abfragesignal zu erzeugende elektromagnetische Feld aus einer nach wie vor vorhandenen internen Stromversorgung beziehen kann. Alternativ kann die interne Stromversorgung entfallen und der Transponder die Energie aus dem flexiblen elektrischen Leiter beziehen.

In den vorstehend beschriebenen Verfahren gemäß den jeweiligen Aspekten der Erfindung wird ein Ausgang bereitgestellt. Somit ist damit auch die Möglichkeit umfasst, dass wenigstens ein Ausgang bereitgestellt wird, also insgesamt mehrere Ausgänge bereitgestellt werden. Während im Prinzip immer ein einziger Eingang vorliegt, der mich die Öffnung, in die der Pfropfen eingeführt wird, kann eine entsprechende Ausführungsform mit mehr als einem Ausgang insbesondere im Falle einer Druckbeaufschlagung mit einem gasförmigen Medium dann sinnvoll sein, wenn der Prüfabschnitt vor einer Verzweigung des Rohrsystems liegt, und wenigstens zwei der Rohre hinter der Verzweigung mit jeweils einem Ausgang in Verbindung stehen. In diesem Fall wird der Pfropfen oder die Sonde auf jeden Fall bis zur Verzweigung transportiert und anschließend zufällig in eine der Verzweigungen eintreten oder im Bereich der Verzweigung liegen bleiben, da das mit Druck beaufschlagte gasförmige Medium sich vorzugsweise über diejenige Verzweigung entspannen wird, die weniger durch den Pfropfen oder die Sonde blockiert wird. Gemäß einer alternativen Ausführungsform werden genau ein Eingang und genau ein Ausgang bereitgestellt, also ein einziger Eingang und ein einziger Ausgang. Folglich sind der Pfropfen bzw. die Sonde gezielt vom Eingang bis zum Ausgang transportierbar, da sich im Falle einer Druckbeaufschlagung das gasförmige Medium an keiner Stelle durch einen alternativen, nicht von dem Pfropfen bzw. von der Sonde abgedichteten Ausgang entspannen kann. Umgekehrt kann im Falle des Erzeugens eines Unterdrucks dieser Unterdruck nur dadurch abgebaut werden, dass sich der Pfropfen in Richtung des Ausgangs bewegt, da keine anderen Ausgänge zur Verfügung stehen, über die ein Druckausgleich erfolgen könnte. Diese alternative Ausführungsform ist insbesondere dann sinnvoll, wenn ein Druckgefälle ausschließlich durch Erzeugen eines Unterdrucks in einem zwischen dem Pfropfen und einem Ausgang befindlichen Bereich des Rohrsystems erzeugt wird.

In einem Minimalfall ist es ausreichend, wenn über eines der vorstehend genannten erfindungsgemäßen Verfahren ein einziger Prüfabschnitt des Rohrsystems lokalisiert wird. Beispielsweise kann dies ausreichen, wenn lediglich eine Stelle der Oberfläche, hinter der das Rohrsystem angeordnet ist, ermittelt werden soll, um an dieser Stelle eine Änderung vorzunehmen, beispielsweise um eine Verzweigung des Rohrsystems einzubauen, oder um sicherzustellen, dass an einer benachbarten Stelle der Wand ohne Beeinträchtigung des Rohrsystems eine Veränderung vorgenommen werden kann, beispielsweise eine Bohrung vorgenommen werden kann. Erfindungsgemäß ist jedoch auch umfasst, dass wenigstens ein Teilverlauf eines wenigstens ein Rohr umfassenden Rohrsystems ermittelt wird, wobei das entsprechende Verfahren ein Lokalisieren eines Prüfabschnitts des Rohrsystems gemäß einem der vorstehend beschriebenen Verfahren, weiterhin ein Lokalisieren wenigstens eines zweiten Prüfabschnitts des Rohrsystems gemäß einem der vorstehend beschriebenen Verfahren, und weiterhin die Bestimmung des Teilverlaufs durch Zusammensetzen der lokalisierten Prüfabschnitte umfasst. Die Teilverläufe können voneinander getrennt sein, aneinander anschließen oder sich teilweise überlappen. Selbstverständlich wird letztendlich auch die Möglichkeit bereitgestellt, alle Teilverläufe des Rohrsystems zu erfassen und somit dessen Gesamtverlauf zu ermitteln.

Beispielsweise wird im Rahmen der Erfindung die Möglichkeit bereitgestellt, ein Rohrsystem umfassend zu lokalisieren, indem beispielsweise immer der gleiche Eingang und jeweils ein anderer Ausgang verwendet werden. Umfasst beispielsweise ein Rohrsystem ein erstes Rohr, welches sich anschließend einmal verzweigt und in zwei Rohrenden endet, so könnte anfänglich die Öffnung des ersten Rohrs als Eingang verwendet werden und eines der beiden Rohrenden als Ausgang, während das andere Rohrende verschlossen wird. Mittels eines innerhalb des Rohrsystems verlaufenden flexiblen elektrischen Leiters kann der Verlauf vom Eingang bis zum gewählten Ausgang über entsprechende Prüfabschnitte ermittelt werden, womit praktisch ein Schenkel des Rohrsystems lokalisiert wäre. Anschließend würde der bisher offene Ausgang verschlossen und der bisher verschlossene Ausgang geöffnet werden. Mittels eines nunmehr vom Eingang bis zum jetzt aktiven Ausgang verlaufenden flexiblen elektrischen Leiters könnte der andere Schenkel des Rohrsystems lokalisiert werden. Damit wären in diesem Beispiel alle Teilverläufe des Rohrsystems lokalisiert, und der Gesamtverlauf des Rohrsystems wäre folglich ermittelt.

Bei den vorstehend genannten Verfahren besteht gemäß einer Ausführungsform mindestens eines der vom Rohrsystem umfassten Rohre aus einem nichtleitenden Material oder weist eine Oberfläche aus einem nichtleitenden Material auf. In derartigen Fällen können die erfindungsgemäßen Verfahren vorteilhaft zum Einsatz kommen, da es nicht möglich ist, an die Rohre selbst eine elektrische Spannung anzulegen, um diese zur Erzeugung eines elektromagnetischen Felds zu veranlassen, über welches die Rohre selbst lokalisiert werden könnten. Ebenfalls ist es nicht möglich, mittels Einstrahlung eines elektromagnetischen Felds eine Spannung in den Rohren zu induzieren, die abgegriffen werden könnte und für eine Lokalisierung genutzt werden könnte. Dagegen ist es möglich, mittels eines erfindungsgemäßen Verfahrens einen elektrischen Leiter und/oder eine Sonde in das Rohrsystem einzubringen und die Lokalisierung vorzunehmen. Die erfindungsgemäßen Verfahren gemäß der verschiedenen Aspekte sind somit insbesondere vorteilhaft angesichts des Umstandes, dass in Rohrsystemen zunehmend Rohre verbaut werden, die ausschließlich aus Kunststoff bestehen, oder einen von einem Kunststoff ummantelten Metallkern aufweisen, der somit für das Anlegen einer elektrischen Spannung nicht zugänglich ist. Ein Beispiel für Rohre mit einem Metallkern und einer Ummantelung aus Kunststoff sind sogenannte Aluminiumverbundleitungen, in der Kurzform auch als Aluverbundleitungen bekannt.

Das gasförmige Medium, mit dem die Druckbeaufschlagung erfolgt, kann in den Verfahren gemäß den verschiedenen Aspekten in Kenntnis des hier offenbarten Erfindungsgedankens vom Fachmann geeignet ausgewählt werden. Ein Beispiel für ein gasförmiges Medium ist Druckluft, also normale Umgebungsluft, die auf einen Druck gebracht wird, der höher ist als der in der Umgebung des Rohrsystems herrschende Druck. Da das Rohrsystem sich in der Regel in einem Gebäude befinden wird, wird es sich bei dem Umgebungsdruck um den Atmosphärendruck handeln. Insbesondere für Rohrsysteme, in denen sich aufgrund ihrer bestimmungsgemäßen Verwendung Faulgase oder andere brennbare oder explosive Gasgemische befinden könnten, beispielsweise Abwasserleitungen, kommen als weitere Beispiele für gasförmige Medien inerte Gase infrage, beispielsweise Stickstoffgas, Edelgase wie etwa Argongas, Kohlendioxidgas oder gasförmige halogenierte Kohlenwasserstoffe, wobei gegebenenfalls Sicherheits- und Umweltvorschriften zu beachten sind. Weitere Alternativen stellen Gasgemische aus zwei oder mehr der vorgenannten Gase und/oder Luft dar. Der Druck, unter dem sich das gasförmige Medium beim Druckbeaufschlagen des Rohrsystems befindet, lässt sich in Kenntnis des Erfindungsgedankens ebenfalls vom Fachmann in Abhängigkeit insbesondere von der Länge des Rohrsystems, der Größenanpassung des Pfropfens auf den Querschnitt der Rohre des Rohrsystems, der Geschwindigkeit, mit welcher der Pfropfen innerhalb des Rohrsystems transportiert werden soll, und/oder der mechanischen Belastbarkeit der Rohre des Rohrsystems geeignet auswählen. Nicht beschränkte Beispiele für geeignete Druckbereiche sind solche von mehr als Atmosphärendruck bis 5 MPa, beispielsweise 0,11 MPa bis 5 MPa, 0,12 MPa bis 2,5 MPa, 0,13 MPa bis 1,5 MPa, oder 0,15 MPa bis 1 MPa. Da mit den flexiblen Zugmitteln bzw. den flexiblen elektrischen Leitern, die ein Pfropfen hinter sich her zieht, keine großen Massen zu transportieren sind und auch ein Pfropfen, gegebenenfalls in Kombination mit einer Sonde, eine geringe Masse aufweist, beispielsweise wenige 100 mg bis wenige 100 g, sind in der Regel nur geringe Drücke erforderlich, wodurch vorteilhaft auch der apparative Aufwand zur Bereitstellung der Druckbeaufschlagung sinkt. In der Regel genügen Drücke, die 0,01 MPa bis 0,5 MPa, beispielsweise 0,02 MPa bis 0,2 MPa oder 0,03 MPa bis 0,1 MPa über dem Umgebungsdruck liegen. Während des Druckbeaufschlagens braucht der Druck nicht konstant zu bleiben, sondern kann variiert werden, beispielsweise um die Geschwindigkeit des Transports des Pfropfens durch das Leitungssystem zu beeinflussen. Durch die Verwendung eines gasförmigen Mediums für die Druckbeaufschlagung tritt beim Eintreffen dieses Mediums an dem oder den Ausgängen vorteilhaft lediglich ein Gasstrom aus, gegebenenfalls mit geringen Resten von Flüssigkeiten oder Feststoffen, die in dem Rohrsystem vorhanden sind. Gravierende Verschmutzungen durch das für die Druckbeaufschlagung verwendete gasförmige Medium selbst, entweder am Eingang in das Rohrsystem oder insbesondere am Ausgang des Rohrsystems, werden jedoch vermieden.

Beim Erzeugen eines Unterdrucks wird das gasförmige Medium, das sich in einem Bereich des Rohrsystems zwischen dem Pfropfen und einem Ausgang des Rohrsystems befindet, auf einen Druck gebracht, der geringer ist als der vorherrschende Umgebungsdruck, beispielsweise der vorherrschende Atmosphärendruck. So beträgt beispielsweise die Druckdifferenz zwischen diesem Bereich des Rohrsystems und dem vorherrschenden Umgebungsdruck bis zu 0,09 MPa, beispielsweise bis zu 0,07 MPa, bis zu 0,05 MPa, bis zu 0,03 MPa, bis zu 0,02 MPa oder bis zu 0,01 MPa. Da in dem Bereich zwischen dem Eingang und dem Pfropfen wiederum der Umgebungsdruck herrscht, wird somit ein Druckgefälle bereitgestellt, welches den Pfropfen in Richtung des Ausgangs transportiert, an dem der Unterdruck erzeugt wird. Das in den Bereich des Rohrsystems zwischen dem Pfropfen und einem Ausgang befindliche gasförmige Medium wird in der Regel atmosphärische Luft sein, oder beispielsweise ein Gasgemisch aus atmosphärischer Luft und im Rohrsystem gebildeten Gasen, wie etwa Faulgasen. Maßnahmen zur Erzeugung eines Unterdrucks sind dem Fachmann bekannt, beispielsweise Absaugen des gasförmigen Mediums mittels einer Pumpe und/oder eines Unterdruckbehälters.

Das Erzeugen eines Druckgefälles kann entweder durch Druckbeaufschlagen oder durch Erzeugen eines Unterdrucks erfolgen, jedoch können beide Maßnahmen auch miteinander kombiniert werden.

Gemäß einem fünften Aspekt ist die Aufgabe gelöst durch eine Anordnung zur Durchführung eines der vorstehend genannten Verfahren, wobei die Anordnung einen Pfropfen umfasst. Weiterhin umfasst die Anordnung ein an dem Pfropfen befestigtes flexibles Zugmittel oder einen an dem Pfropfen befestigten flexiblen elektrischen Leiter. Der Pfropfen kann in verschiedenen Größen bereitgestellt werden, um jeweils eine geeignete Größe für ein Einführen in einen Eingang eines Rohrsystems und eine Verlagerbarkeit innerhalb des Rohrsystems zu ermöglichen. Gleichermaßen kann das flexible Zugmittel und/oder der flexible elektrische Leiter in verschiedenen Längen und Durchmessern bereitgestellt werden, um dem Einsatz in Rohrsystemen verschiedener Längen Rechnung zu tragen. Auf die zuvor im Rahmen der erfindungsgemäßen Verfahren gemachten Ausführungen hinsichtlich des Pfropfens, des flexiblen Zugmittels und/oder des flexiblen elektrischen Leiters wird ebenfalls Bezug genommen.

Gemäß einer Ausführungsform der Anordnung umfasst diese weiterhin eine an dem Pfropfen oder an dem flexiblen Zugmittel oder an dem flexiblen elektrischen Leiter befestigte Sonde. Der Pfropfen und die Sonde liegen somit als eigenständige, jedoch miteinander verbundene oder vor einem Einsatz innerhalb eines Rohrsystems verbindbare Bauteile vor. Vorzugsweise ist die Sonde zwischen dem Pfropfen und dem flexiblen Zugmittel bzw. dem flexiblen elektrischen Leiter angeordnet, sodass der Transport innerhalb des Rohrsystems mit dem Pfropfen voran erfolgt. Gemäß einer Weiterbildung umfasst die Sonde, insbesondere wenn sie zusammen mit einem flexiblen Zugmittel anstelle eines flexiblen elektrischen Leiters vorliegt, eine interne Stromversorgung. Die Sonde umfasst weiterhin einen Transmitter zur Erzeugung eines elektromagnetischen Felds und/oder einen Transponder für die Erzeugung eines elektromagnetischen Felds als Reaktion auf ein Abfragesignal. Dementsprechend kann die Anordnung einen Signalgeber zur Erzeugung eines Abfragesignals umfassen.

Gemäß einer Ausführungsform umfasst der Pfropfen eine Sonde. Beispielsweise kann die Sonde mit einer Hülle umgeben sein, welche die Funktion eines Pfropfens erfüllt, also insbesondere den Querschnitt des Pfropfens an den Querschnitt eines Rohrs anpasst, innerhalb dessen der Pfropfen zusammen mit der Sonde verlagerbar sein soll.

Hinsichtlich zusätzlicher Ausführungsformen zur Sonde wird auf die im Rahmen der erfindungsgemäßen Verfahren gemachten Ausführungen verwiesen.

Gemäß einer Ausführungsform umfasst die Anordnung weiterhin einen Detektor zum Detektieren eines elektromagnetischen Feldes und/oder eine Spannungsquelle zum Anlegen einer Spannung an einen elektrischen Leiter bzw. eine Stromquelle zum Einspeisen eines Stromes in einen elektrischen Leiter, und/oder eine Vorrichtung zur Druckbeaufschlagung eines Rohrsystems an dessen Eingang mit einem gasförmigen Medium, und/oder eine Vorrichtung zum Erzeugen eines Unterdrucks. Beispiele für Detektoren sind die im Rahmen der Besprechung der erfindungsgemäßen Verfahren bereits genannten Feldmeter oder Elektrofeldmeter, oder Diagnosegeräte zur Detektion elektromagnetischer Gleich- oder Wechselfelder. Diese Detektoren umfassen in der Regel Einstellmöglichkeiten zur Wahl der Frequenz der entsprechenden elektromagnetischen Felder und zur Wahl der Detektionsempfindlichkeit in Anpassung an die Stärke eines elektromagnetischen Felds. Dementsprechend umfassen die zugehörigen Spannungsquellen, die verwendet werden können, um eine Spannung an einen flexiblen elektrischen Leiter anzulegen und dadurch ein entsprechendes elektromagnetisches Feld zu erzeugen, Einstellmöglichkeiten zur Wahl der Frequenz der Spannungen und zur Anpassung der Feldstärke der elektromagnetischen Felder.

Die Vorrichtung zur Druckbeaufschlagung eines Rohrsystems an dessen Eingang mit einem gasförmigen Medium umfasst gemäß einer Weiterbildung einen Druckbehälter, in dem gasförmiges Medium unter Druck gespeichert ist, weiterhin ein Ventil, um gasförmiges Medium aus dem Druckbehälter freizusetzen. Ist das gasförmige Medium in dem Druckbehälter unter hohem Druck gespeichert, kann das Ventil als Druckreduzierventil ausgebildet sein. Gemäß einer anderen Weiterbildung umfasst die Vorrichtung zur Druckbeaufschlagung eine Pumpe zum Komprimieren eines angesaugten gasförmigen Mediums, beispielsweise der Umgebungsluft. Die Vorrichtung zur Druckbeaufschlagung umfasst vorzugsweise eine Druckmedium-Düse, aus der das gasförmige Medium austritt und in den Eingang des Rohrsystems geleitet werden kann. Alternativ oder zusätzlich umfasst die Vorrichtung eine Adaptereinheit, um das aus dem Druckbehälter freigesetzte gasförmige Medium oder das mittels der Pumpe komprimierte angesaugte gasförmige Medium zur Einspeisung in den Eingang des Rohrsystems an diesen Eingang anzupassen und dadurch eine verlustfreie oder möglichst verlustfreie Einspeisung zu ermöglichen. Dabei kann die Druckmedium-Düse gleichzeitig als Adaptereinheit ausgebildet sein, oder die Vorrichtung zur Druckbeaufschlagung zusätzlich zur Druckmedium-Düse eine Adaptereinheit für ein Zusammenwirken mit der Druckmedium-Düse umfassen. Die Adaptereinheit kann beispielsweise einen Schraub-, Bajonett- oder Klemmadapter umfassen, der an ein entsprechendes Schraubgewinde wie etwa eine Überwurfmutter, einen Bajonettanschluss oder mit einer Öffnung des Eingangs des Rohrsystems verschraubt, verrastet oder verbunden wird. Weitere Beispiele für die Adaptereinheit sind ein Rohr mit einer elastischen Außendichtung, vorzugsweise einer sich verjüngenden elastischen Außendichtung, welches in den Eingang des Rohrsystems eingesteckt wird, bis eine Dichtwirkung eintritt, oder ein Rohr mit einer elastischen Innendichtung, vorzugsweise einer sich verjüngenden elastischen Innendichtung, welches auf ein Rohr des Eingangs des Rohrsystems aufgesteckt wird. Ein weiteres Beispiel ist eine Manschette aus einem Elastomer, die gemäß dem von Saugglocken her bekannten Prinzip auf einen Wandabschnitt, der den Eingang zum Rohrsystem beinhaltet, aufgesetzt werden kann, beispielsweise im wesentlichen glockenförmig geformt ist und durch Anpressen diesen Eingang gegenüber der Außenwelt abdichtet, sodass das gasförmige Medium in den Eingang eingeleitet werden kann und somit die Druckbeaufschlagung vorgenommen werden kann.

Erfolgt die Druckbeaufschlagung mittels einer Druckmedium-Düse und ohne spezielle Adaptereinheit, so wird diese in oder an den Eingang des Rohrsystems gehalten, in dem der Pfropfen mit dem daran befestigten flexiblen Zugmittel oder flexiblen elektrischen Leiter eingeführt ist. Über einen verbleibenden Spalt zwischen der Druckmedium-Düse und dem Eingang kann ein außerhalb des Rohrsystems befindliches flexibles Zugmittel oder befindlicher flexibler elektrischer Leiter nachgeliefert werden, während der Pfropfen im Rohrsystem transportiert wird. Erfolgt die Druckbeaufschlagung mittels einer Adaptereinheit, die eine im Wesentlichen druckdichte Abschottung des Eingangs des Rohrsystems von der Umgebung darstellt, so ist gemäß einer Weiterbildung das flexible Zugmittel oder der flexible elektrische Leiter mit seinem dem Pfropfen entgegengesetzten Ende innerhalb der Adaptereinheit fixiert. Alternativ kann die Adaptereinheit einen vorzugsweise auf den Querschnitt des flexiblen Zugmittels oder des flexiblen elektrischen Leiters abgestimmten Durchbruch aufweisen, um dieses/diesen von außen in das Rohrsystem nachzuliefern.

Neben der Möglichkeit, dass das flexible Zugmittel oder der flexible elektrische Leiter sozusagen über eine Schleuse, beispielsweise über einen Durchbruch eine Adaptereinheit von außen in das Rohrsystem eingeführt wird, gibt es auch die Möglichkeit, dass die Vorrichtung zur Druckbeaufschlagung das flexible Zugmittel oder den flexiblen elektrischen Leiter intern beherbergt, beispielsweise platzsparend aufgerollt, und aus diesem Reservoir das flexible Zugmittel bzw. der flexible elektrische Leiter abgespult wird, je weiter der damit verbundene Pfropfen oder die damit verbundene Sonde im Rohrsystem transportiert wird.

Vorrichtungen zur Erzeugung eines Unterdrucks sind dem Fachmann bekannt, beispielsweise Pumpen und/oder unter Druckbehälter zum Absaugen des gasförmigen Mediums, das sich innerhalb eines Rohrsystems bzw. in einem zwischen einem Pfropfen und einem Ausgang befindlichen Bereich des Rohrsystems befindet. Nicht-beschränkende Beispiele für Pumpen sind elektrische Pumpen, mechanische Pumpen und Wasserstrahlpumpen. Die Vorrichtung zur Erzeugung des Unterdrucks kann eine Ansaugdüse umfassen, die an den Ausgang anlagerbar oder in den Ausgang einführbar ist, um ein in dem Rohrsystem befindliches gasförmiges Medium, in der Regel Luft, abzusaugen. Analog zu den Ausführungen, die vorstehend für die Vorrichtung zur Druckbeaufschlagung gemacht wurden, kann die Ansaugdüse gleichzeitig als Adaptereinheit ausgebildet sein oder mit einer Adaptereinheit zusammenwirken, wobei die Adaptereinheit ein möglichst effektives Ansaugen des gasförmigen Mediums aus dem Rohrsystem ermöglicht, sodass ein Nachströmen eines gasförmigen Mediums aus der Umgebung, wie etwa atmosphärischer Luft, so weit wie möglich unterbunden wird.

Wird eine Vorrichtung zur Erzeugung eines Unterdrucks verwendet, so genügt es, am Eingang in das Rohrsystem einen entsprechenden Pfropfen und/oder eine Sonde mit daran befestigtem flexiblen Zugmittel oder daran befestigtem flexiblen elektrischen Leiter bereitzustellen. Alternativ können spezielle Vorrichtungen verwendet werden, die beispielsweise ein Abspulen eines flexiblen Zugmittels oder eines flexiblen elektrischen Leiters ermöglichen.

Eine Anordnung gemäß dem fünften Aspekt ist geeignet zur Durchführung eines Verfahrens gemäß dem ersten bis vierten Aspekt.

Gemäß einem sechsten Aspekt ist die Aufgabe gelöst durch eine Vorrichtung zur Druckbeaufschlagung, die einen von einem Gehäuse umgebenen Druckmedium-Kanal umfasst, der mittels eines zwischen einer Ruhestellung und einer Betriebsstellung verlagerbaren Sperrelements in dessen Ruhestellung verschließbar und in der Betriebsstellung des Sperrelements von einem mit Druck beaufschlagten gasförmigen Medium durchströmbar ist. Die Vorrichtung umfasst weiterhin eine Druckmedium-Düse, aus der das mit Druck beaufschlagte gasförmige Medium aus dem Druckmedium-Kanal ausleitbar ist, und eine Einleitdüse, mittels derer ein flexibles Zugmittel und/oder ein flexibler elektrischer Leiter in den Druckmedium-Kanal einführbar ist. Der Druckmedium-Kanal ermöglicht den Transport des mit Druck beaufschlagten gasförmigen Mediums in Richtung der Druckmedium-Düse. Die Druckmedium-Düse ist vorzugsweise gleichzeitig als Adaptereinheit ausgebildet und ermöglicht somit eine verlustfreie oder weitgehend verlustfreie Einspeisung des Druckmediums in den Eingang eines Rohrsystems. Bei dem mit Druck beaufschlagten gasförmigen Medium handelt es sich vorzugsweise um Druckluft, sodass der Druckmedium-Kanal in diesem Fall einen Druckluftkanal, und die Druckmedium-Düse eine Druckluftdüse darstellt. Das mit Druck beaufschlagte Medium kann beispielsweise über eine Druckmedium-Leitung, die beispielsweise mit einem Kompressor oder mit einer Druckflasche in Verbindung steht, in den Druckmedium-Kanal der Vorrichtung zur Druckbeaufschlagung eingespeist werden, wobei die Druckmedium-Leitung vorzugsweise mit der Vorrichtung zur Druckbeaufschlagung vorzugsweise reversibel verbindbar ist. Technische Möglichkeiten zur reversiblen Verbindung sind dem Fachmann geläufig, wobei gemäß einer Weiterbildung die Druckmedium-Leitung mittels eines Bajonettverschlusses, gemäß einer anderen Weiterbildung mittels eines Schraubverschlusses mit dem Gehäuse der Vorrichtung zur Druckbeaufschlagung reversibel verbindbar ist. Das zwischen einer Ruhestellung und einer Betriebsstellung verlagerbare Sperrelement ist gemäß einer Weiterbildung als ein Kolben ausgebildet, der in der Ruhestellung den Druckmedium-Kanal verschließt und diesen in der Betriebsstellung wenigstens teilweise freigibt. Gemäß einer anderen Weiterbildung ist das Sperrelement als eine verschwenkbare Klappe ausgebildet. Das Verlagern des Sperrelements zwischen der Ruhestellung und der Betriebsstellung erfolgt gemäß einer Weiterbildung mittels eines Auslösehebels, der auf das Sperrelement einwirkt. Beispielsweise ist der Auslösehebel mittels eines Bolzens mit dem Sperrelement verbunden und selbst schwenkbar oder verlagerbar mit dem Gehäuse verbunden. Wird der Auslösehebel betätigt und damit verschwenkt oder verlagert, so überträgt sich dessen Bewegung mittels des Bolzens mechanisch direkt auf das Sperrelement. Als weiteres Beispiel wirkt der Auslösehebel indirekt, beispielsweise über elektromechanische oder elektronische Aktoren, auf das Sperrelement ein. Die Einleitdüse der Vorrichtung zur Druckbeaufschlagung ermöglicht es, ein flexibles Zugmittel oder einen flexiblen elektrischen Leiter in den Druckmedium-Kanal einzuleiten. Vorzugsweise ist die Einleitdüse auf den Querschnitt des flexiblen Zugmittels bzw. des flexiblen elektrischen Leiters abgestimmt oder abstimmbar, beispielsweise nur minimal größer, sodass nur ein minimaler Druckverlust des mit Druck beaufschlagten gasförmigen Mediums entsteht, wenn ein flexibles Zugmittel bzw. ein flexibler elektrischer Leiter durch die Einleitdüse in den Druckmedium-Kanal eingeleitet wird. Ein Beispiel für eine Einleitdüse ist eine Düse mit sich in Richtung des Druckmedium-Kanals konisch verjüngender Düse, deren geringster Querschnitt dem Querschnitt eines einzuleitenden flexiblen Zugmittels bzw. flexiblen elektrischen Leiters entspricht oder geringfügig größer ist als dieser. Ebenfalls vorgesehen ist die Möglichkeit austauschbarer Einleitdüsen, die reversibel an der Vorrichtung zur Druckbeaufschlagung befestigbar sind und jeweils auf unterschiedliche Querschnitte von einzuleitenden flexiblen Zugmitteln bzw. flexiblen elektrischen Leitern abgestimmt sind.

Die Vorrichtung gemäß dem sechsten Aspekt eignet sich als Teil einer Anordnung gemäß dem fünften Aspekt und zur Durchführung eines Verfahrens gemäß dem ersten bis vierten Aspekt.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine schematische Versuchsanordnung zur Durchführung eines erfindungsgemäßen Verfahrens mit unverschlossenen Öffnungen,
- Fig. 2: die schematische Versuchsanordnung aus Fig. 1 mit unverschlossenem Eingang und einem unverschlossenen Ausgang,
- Fig. 3: den Transportweg eines Pfropfens mit flexiblem Zugmittel durch das Rohrsystem,
- Fig. 4: den Verlauf eines flexiblen elektrischen Leiters durch das Rohrsystem,
- Fig. 5: das flächige Lokalisieren des flexiblen elektrischen Leiters im Rohrsystem,
- Fig. 6: einen schematischen Längsschnitt durch eine Vorrichtung zur Druckbeaufschlagung, und
- Fig. 7: einen schematischen Längsschnitt durch eine weitere Vorrichtung zur Druckbeaufschlagung.

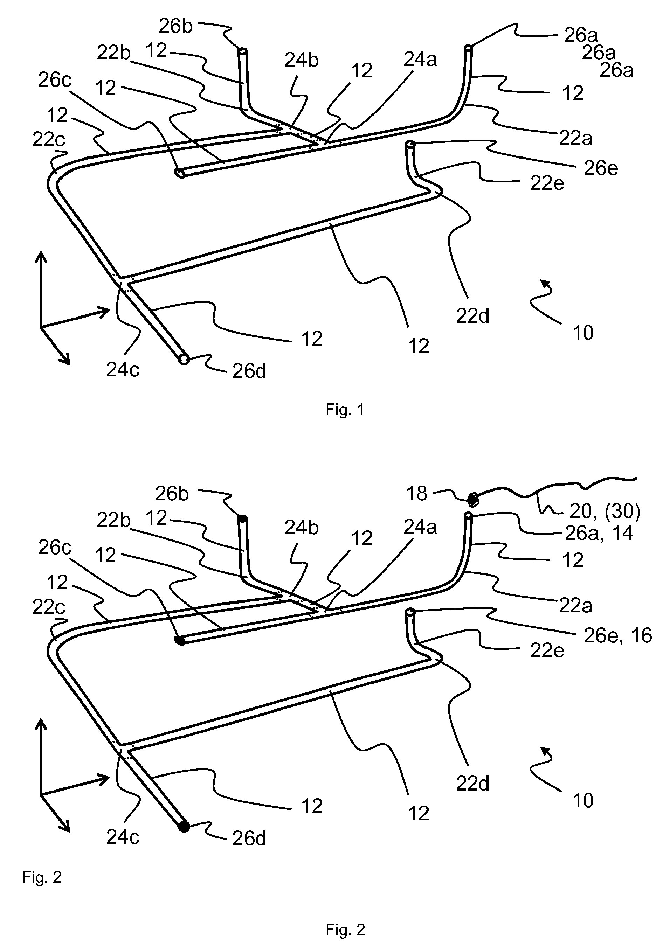

**Figur 1** zeigt eine schematische Versuchsanordnung zur Durchführung eines erfindungsgemäßen Verfahrens in räumlicher Ansicht, wobei zur besseren räumlichen Orientierung hilfsweise ein Koordinatensystem dargestellt ist. Dabei wurde ein Rohrsystem 10 mit einer Gesamtlänge von 11,5 m erstellt, das drei T-Stücke 24a, 24b, 24c sowie fünf 90°-Bogen 22a, 22b, 22c, 22d, 22e, also Bögen mit einer Krümmung von 90°, in unterschiedlichen Raumebenen aufwies. Die Grenzen der T-Stücke 24a, 24b, 24c sind in der Figur 1 durch Punktlinien symbolisiert. Das Rohrsystem 10 entsprach hinsichtlich Länge und Komplexität ohne weiteres einem Rohrsystem, das in einem Raum eines Gebäudes, beispielsweise einem Badezimmer, verbaut sein kann. Die Rohre 12 des Rohrsystems 10 wiesen einen Durchmesser von 16 mm und eine Wandstärke von 2,2 mm auf. Die Innendurchmesser der Rohre 12 im Bereich der Bögen 22a, 22b, 22c, 22d, 22e sowie die Innendurchmesser der T-Stücke 24a, 24b, 24c betrugen etwa 10 mm. Durch die verbauten Rohre 12 weist das Rohrsystem 10 fünf Öffnungen 26a, 26b, 26c, 26d, 26e auf, die natürliche Eingänge in das Rohrsystem darstellen und in der Figur 1 geöffnet sind, was durch die helle Öffnungsquerschnittsfläche symbolisiert ist.

**Figur 2** zeigt die schematische Versuchsanordnung aus Figur 1, wobei nun die drei Öffnungen 26b, 26c und 26d verschlossen wurden, was durch die dunklen Öffnungsquerschnittsflächen symbolisiert ist, während die Öffnungen 26a und 26e unverschlossen blieben, symbolisiert durch die nach wie vor hellen Öffnungsquerschnittsflächen, und als Eingang 14 bzw. als Ausgang 16 gewählt wurden. Als Pfropfen 18 wurde ein handelsüblicher, normalerweise zur Reinigung von Bierleitungen verwendeter Gummischwamm mit einem ungefähren Durchmesser von 13 mm im unkomprimierten Zustand verwendet (bezogen von der Fuchs Gastronomiebedarf GmbH, 63165 Mühlheim/Main, Deutschland). Alternativ wurden bei einem parallelen Versuchsansatz mit einem Rohrsystem 10, dessen Rohre 12 einen Innendurchmesser von 7 mm aufwiesen, entsprechende Pfropfen 18 mit einem Durchmesser von 9 mm verwendet.

In einem ersten Versuchsansatz wurde der Pfropfen 18 einer handelsüblichen, geflochtenen Angelschnur aus Kunststoff (Dyneema®-Garn, einem "High Performance Polyethylen", "AngelSpezi Pro", bezogen von NBB-Fachgeschäfte für Angelsport GmbH, 31552 Rodenberg, Deutschland) mit einem Durchmesser von 0,12 mm als flexibles Zugmittel 20 befestigt. Der Pfropfen 18 wurde in den Eingang 14 des Rohrsystems 10 eingeführt.

In einem zweiten Versuchsansatz wurde der Pfropfen 18 mit einem Spezial-Federdraht mit einem Durchmesser von 0,18 mm befestigt, der einen flexiblen elektrischen Leiter 30 darstellte, worauf sich in der Figur 2 das Bezugszeichen in Klammern bezieht.

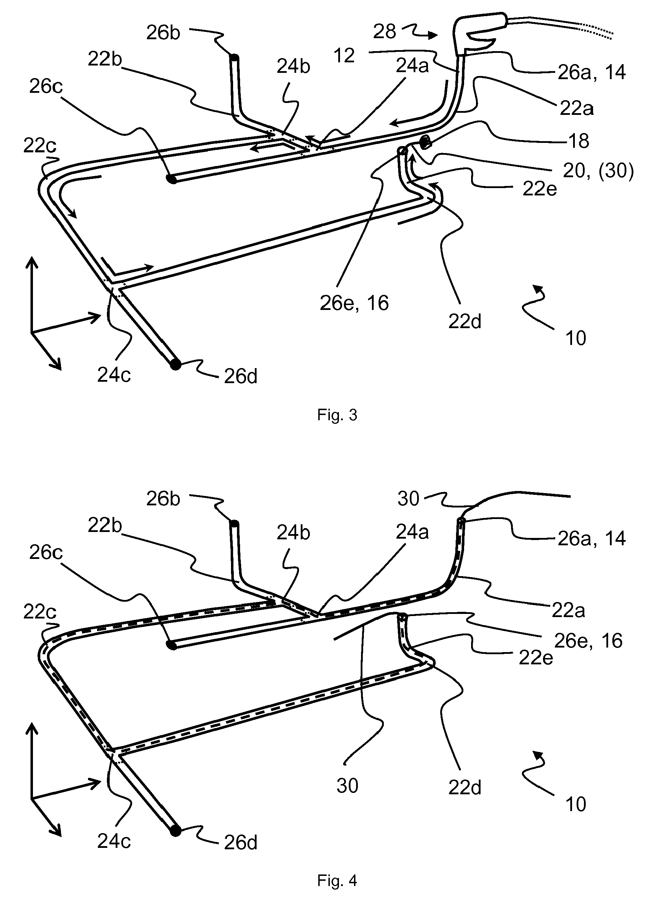

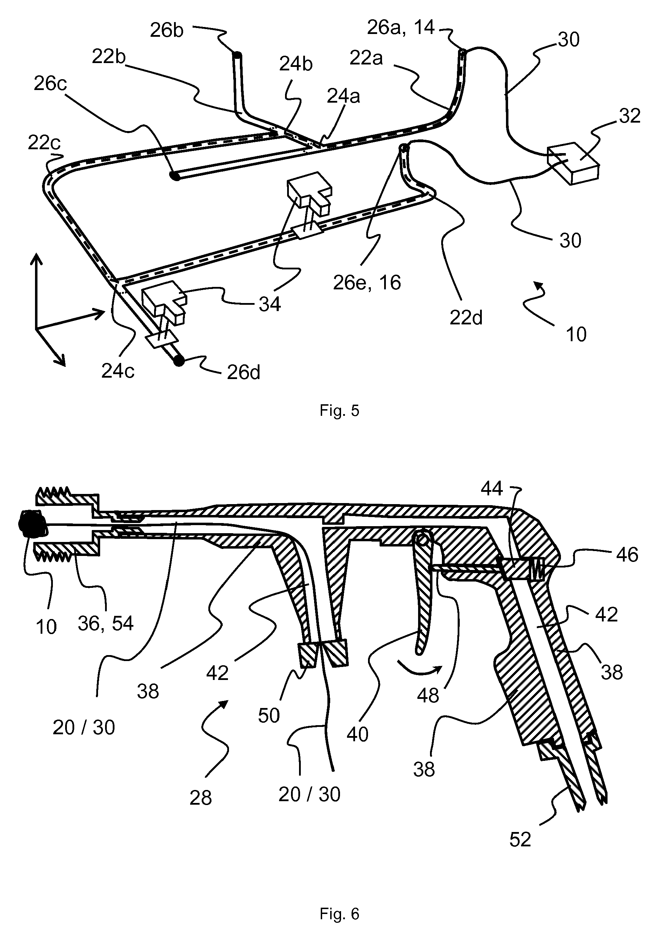

**Figur 3** zeigt in Fortsetzung von Figur 2 den weiteren Ablauf des Verfahrens. Der besseren Übersichtlichkeit halber sind nicht alle der in den früheren Figuren 1 und 2 gezeigten Teile mit Bezugszeichen versehen. Der Eingang 14 in das Rohrsystem 10 wurde mit einer in der Figur 3 nicht dargestellten Überwurfmutter mit Innengewinde versehen. Anschließend wurde als Vorrichtung zur Druckbeaufschlagung 28 eine mit einem nicht dargestellten Kompressor verbundene Druckluftpistole, deren Druckluftdüse ein zu dem Innengewinde der Überwurfmutter passendes Außengewinde aufwies, mit der Überwurfmutter verbunden. Die Druckluftpistole als Vorrichtung zur Druckbeaufschlagung 28 ist in Figur 3 ohne weitere Details dargestellt, entsprechende Details sind jedoch aus Figur 6 zu entnehmen.

Gemäß dem ersten Versuchsansatz verlief das flexible Zugmittel 20, dessen eines Ende am Pfropfen 18 befestigt war, durch eine Schleuse in der Druckluftpistole 28, sodass von außen flexibles Zugmittel 20 nachgeführt werden konnte. Gemäß dem zweiten Versuchsansatz verlief anstelle des flexiblen Zugmittels 20 der flexible elektrische Leiter 30 durch die Schleuse.

Anschließend wurde gemäß beiden Versuchsansätzen das Rohrsystem 10 am Eingang 14 des entsprechenden Rohres 12 (andere Rohre wurden der besseren Übersichtlichkeit halber nicht mit Bezugszeichen versehen) mit Druck aus der Druckluftpistole 28 beaufschlagt, die an einen nicht dargestellten Kompressor angeschlossen war. Angesichts der verschlossenen Öffnungen 26b, 26c und 26d war als einziger Ausgang 16 die unverschlossene Öffnung 26e verfügbar. Um diesen Ausgang 16 zu erreichen, musste der Pfropfen - wie durch die neben dem Rohrsystem 10 verlaufenden Pfeile symbolisiert wird - den 90°-Bogen 22a, anschließend die Verzweigung am T-Stück 24a und gleich anschließend die Verzweigung am T-Stück 24b, als zweite T-Verzweigung, einen weiteren 90°-Bogen 22c, die Verzweigung am T-Stück 24c und schließlich die beiden in verschiedenen Raumebenen verlaufenden 90°-Bögen 22d und 22e nehmen. Dies gelang problemlos, sodass der Pfropfen 18 und das flexible Zugmittel 20 gemäß dem ersten Versuchsansatz bzw. der flexible elektrische Leiter 30 gemäß dem zweiten Versuchsansatz wie in Figur 3 gezeigt aus dem Ausgang 16 austraten. Somit konnte ein Pfropfen 18 mit dem daran befestigten flexiblen Zugmittel 20 bzw. dem daran befestigten flexiblen elektrischen Leiter 30 über eine längere Strecke innerhalb eines komplex im dreidimensionalen Raum verlaufenden Rohrsystems 10 mit Biegungen und Verzweigungen zum Ausgang 16 des Rohrsystems 10 transportiert werden.

Anschließend wurde die Druckpistole 28 von dem Eingang 14 abgeschraubt.

Im Falle des ersten Versuchsansatzes wurde das Ende des flexiblen Zugmittels 20 mit einem flexiblen metallischen Leiter 30 in Form eines Kupferdrahtes mit einer Querschnittsfläche von 0,75 mm² verbunden, der dann anschließend mittels des flexiblen Zugmittels 20 in Richtung des Ausgangs 16 gezogen wurde, wobei dieser Vorgang in Figur 3 nicht dargestellt ist.

**Figur 4** zeigt wie schon Figur 3 der besseren Übersichtlichkeit halber nicht alle der in den vorhergehenden Figuren 1 und 2 gezeigten Teile mit Bezugszeichen. Dargestellt ist jedoch der flexible elektrische Leiter 30, also der Kupferdraht mit einer Querschnittsfläche von 0,75 mm² im Falle des ersten Versuchsansatzes bzw. der Spezial-Federdraht mit einem Durchmesser von 0,18 mm im Falle des zweiten Versuchsansatzes, wobei die außerhalb des Rohrsystems 10 befindlichen Anteile mit durchgezogenen Linien dargestellt sind und die innerhalb des Rohrsystems 10 befindlichen Anteile gestrichelt dargestellt sind.

**Figur 5** zeigt nun, dass anschließend die beiden Enden des flexiblen elektrischen Leiters 30 mit den Polen einer Spannungsquelle 32 (SeekTech® ST-510, Ridge Tool GmbH & Co. oHG, 58285 Gebelsberg) verbunden wurden, um ein elektromagnetisches Feld des Leiters 30 zu erzeugen. Mittels eines Detektors 34 (SeekTeck SR-20; Ridge Tool GmbH & Co. oHG, 58285 Gebelsberg) erfolgte ein Lokalisieren derjenigen Abschnitte des Rohrsystems 10, in denen tatsächlich der flexible elektrische Leiter 30 verlief, durch Detektieren des flexiblen elektrischen Leiters 30. Dabei wurden die verschiedenen Abschnitte des Rohrsystems 10 im Rahmen eines flächigen Detektierens abgetastet, in dem der Detektor 34, der in der Figur 5 beispielhaft nur an zwei unterschiedlichen Positionen gezeigt ist, entlang einer gedachten Fläche über dem Rohrsystem 10 bewegt wurde und somit das im Bereich des Rohrsystems 10 verlaufende elektromagnetische Feld sozusagen kartierte. Beispielsweise detektierte der Detektor 34 in der Position zwischen dem T-Stück 24c und der Öffnung 26d kein bzw. allenfalls ein sehr schwaches elektromagnetisches Feld, da in diesem Bereich des Rohrsystems 10 kein flexibler elektrischer Leiter 30 verlief. Dagegen wurde in dem Abschnitt des Rohrsystems 10 zwischen dem T-Stück 24c und dem 90°-Bogen 22a ein elektromagnetisches Feld detektiert, da in diesem Bereich des Rohrsystems 10 der flexible elektrische Leiter 30 verlief. Der Übersichtlichkeit halber wurde dieser Versuch mit frei sichtbarem Rohrsystem 10 durchgeführt. Verläuft ein entsprechendes Rohrsystem 10 zumindest teilweise verborgen innerhalb einer Wand, so ist es mithilfe des erfindungsgemäßen Verfahrens und der erfindungsgemäßen Anordnung möglich, Prüfabschnitte zwischen einem Eingang 14 und einem Ausgang 16 aus dem Rohrsystem 10 mittels elektromagnetischer Wechselwirkung zu ermitteln, wenn zwischen dem Eingang 14 und dem Ausgang 16 ein flexibler elektrischer Leiter 30 verläuft, der ein elektromagnetisches Feld erzeugt.

**Figur 6** zeigt in einem schematischen Längsschnitt die in Figur 3 als Vorrichtung zur Druckbeaufschlagung 28 verwendete Druckluftpistole. Die Druckluftpistole 28 weist eine Druckluftdüse 36 mit Außengewinde auf. Das Außengewinde ermöglicht ein Zusammenwirken mit einem nicht dargestellten Innengewinde eines Eingangs in ein Rohrsystem, sodass eine verlustfreie oder weitgehend verlustfreie Einspeisung des mit Druck beaufschlagten gasförmigen Mediums in den Eingang des Rohrsystems möglich ist und die Druckluftdüse 36 gleichzeitig als Adaptereinheit 54 ausgebildet ist. Die Vorrichtung zur Druckbeaufschlagung 28 umfasst ein Gehäuse 38 mit einem schwenkbar darin gelagerten Auslösehebel 40. Das Gehäuse 38 umschließt einen Druckmedium-Kanal 42 und ist, beispielsweise mittels einer Schraub- oder Bajonettverbindung, mit einer Druckmedium-Leitung 52 verbindbar, welche ein mit Druck beaufschlagtes gasförmiges Medium bereitstellt. Beispielsweise handelt es sich bei dem mit Druckbeaufschlagung gasförmigen Medium um Druckluft, womit die Vorrichtung zur Druckbeaufschlagung 28 eine Druckluftpistole und der Druckmedium-Kanal 42 ein Druckluftkanal ist. Ein in Form eines Kolben ausgebildetes und zwischen einer Ruhestellung und einer Betriebsstellung verlagerbares Sperrelement 44 wird von einer Feder 46 normalerweise in der Ruhestellung gehalten, die in der Figur 6 gezeigt ist. In dieser Ruhestellung verschließt das Sperrelement 44 den Druckmedium-Kanal 42. Das Sperrelement 44 ist über einen Bolzen 48 mit dem Auslösehebel 40 verbunden. Wird der Auslösehebel 40 durch Verschwenken in Richtung des gebogenen Pfeils betätigt, so drückt der Bolzen 48 das Sperrelement 44 in Richtung der sich komprimierenden Feder 46 und somit in Richtung der oder bis zur Betriebsstellung. Als Folge davon ist der Druckmedium-Kanal 42 durch das Sperrelement 44 nicht mehr vollständig verschlossen, sondern ist wenigstens teilweise geöffnet, sodass Druckluft in Richtung der Druckmedium-Düse 36 strömen kann. Endet die Betätigung des Auslösehebels 40, so entspannt sich die komprimierte Feder 46 und drückt das Sperrelement 44 wieder in seine Ruhestellung zurück, in welcher das Sperrelement 44 den Druckmedium-Kanal 42 versperrt. Das Gehäuse 38 umfasst weiterhin eine Einleitdüse 50, die einen Durchtritt eines an einem Pfropfen 10 befestigten flexiblen Zugmittels 20 und/oder flexiblen elektrischen Leiters 30 ermöglicht. Der Querschnitt der Einleitdüse 50 ist mindestens an einer Stelle so bemessen, dass angesichts der Abdichtung durch das Zugmittel 20 und/oder des flexiblen elektrischen Leiters 30 kein wesentlicher Druckausgleich erfolgt, wenn der Kolben 44 sich in der Betriebsstellung befindet und demzufolge mit Druck beaufschlagtes gasförmiges Medium, beispielsweise Druckluft, durch den Druckmedium-Kanal 42 strömt. Der Druckunterschied zwischen der Außenumgebung, in der Atmosphärendruck herrscht, und dem Druckmedium-Kanal 42 wird somit im Wesentlichen aufrechterhalten.

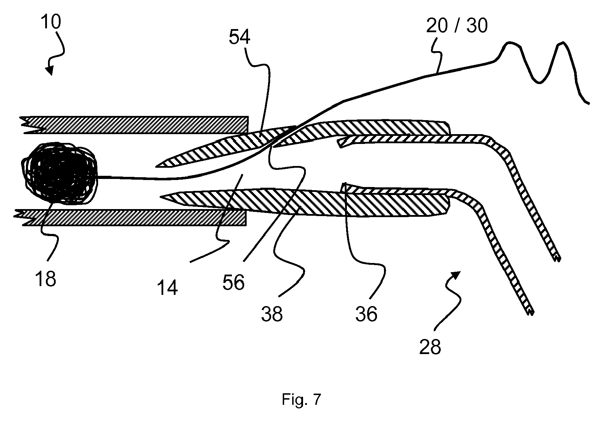

**Figur 7** zeigt als weiteres Beispiel für eine Vorrichtung zur Druckbeaufschlagung 28 eine unvollständig wiedergegebene Druckluftpistole 28. Diese umfasst eine Druckmedium-Düse 36, auf die eine Adaptereinheit 54 in Form einer Hülse aus Gummi oder einem anderen elastischen Material aufgesteckt ist, um einen dichtenden Abschluss in einen Eingang 14 eines Rohrsystems 10 zu ermöglichen. Die Adaptereinheit 54 umfasst noch einen Durchbruch 56, durch den flexibles Zugmittel 20 oder ein flexibler elektrischer Leiter 30 geführt ist, welches/welcher mit einem Pfropfen 18 verbunden ist. Bei Druckbeaufschlagung mit der in Pfeilrichtung strömenden Druckluft als gasförmiges Medium wird der Pfropfen 18 vom Eingang 14 weg weiter in das Rohrsystem 10 transportiert. Durch den Durchbruch 40 kann dabei flexibles Zugmittel 20 von einem Reservoir außerhalb der Vorrichtung zur Druckbeaufschlagung 28 nachgeliefert werden, ohne die Druckbeaufschlagung wesentlich zu stören.

Wenngleich die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten sowie Kombinationsmöglichkeiten von Elementen der hierin beschriebenen Ausführungsformen und Weiterbildungen existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Die vorhergehende Beschreibung und die Figurenbeschreibung versetzen den Fachmann vielmehr in die Lage, die beispielhaften Ausführungsformen konkret umzusetzen, wobei der Fachmann in Kenntnis des hierin offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterungen in der Beschreibung, definiert wird.

### Bezugszeichenliste

- 10: Rohrsystem
- 12: Rohr
- 14: Eingang
- 16: Ausgang
- 18: Pfropfen
- 20: flexibles Zugmittel
- 22 a, b, c, d, e: 90°-Bogen
- 24 a, b, c: T-Stück
- 26 a, b, c, d, e: Öffnung
- 28: Vorrichtung zur Druckbeaufschlagung
- 30: flexibler elektrischer Leiter
- 32: Spannungsquelle
- 34: Detektor
- 36: Druckmedium-Düse
- 38: Gehäuse
- 40: Auslösehebel
- 42: Druckmedium-Kanal
- 44: Sperrelement
- 46: Feder
- 48: Bolzen
- 50: Einleitdüse
- 52: Druckmedium-Leitung
- 54: Adaptereinheit
- 56: Durchbruch

## Patentansprüche

1. Verfahren zum Lokalisieren eines hinter einer Oberfläche angeordneten Prüfabschnitts eines wenigstens ein Rohr (12) umfassenden Rohrsystems (10), umfassend:
- Bereitstellen eines Eingangs (14) in das Rohrsystem (10) und eines Ausgangs (16) aus dem Rohrsystem (10),
- Einführen eines in dem Rohrsystem (10) verlagerbaren Pfropfens (18) mit einem daran befestigten flexiblen Zugmittel (20) in den Eingang (14),
- Erzeugen eines Druckgefälles durch Druckbeaufschlagen des zwischen dem Eingang (14) und dem Pfropfen (18) befindlichen Bereichs des Rohrsystems (10) mit einem gasförmigen Medium, und/oder durch Erzeugen eines Unterdrucks in dem zwischen dem Pfropfen (18) und einem Ausgang (16) befindlichen Bereich des Rohrsystems, wodurch der Pfropfen (10) bis zum Ausgang (16) transportiert wird,
- Befestigen eines zur Erzeugung oder Aufnahme eines elektromagnetischen Feldes befähigten flexiblen elektrischen Leiters (30) entweder an dem am Eingang befindlichen Teil des flexiblen Zugmittels (20), oder an dem am Ausgang (16) befindlichen Teil des flexiblen Zugmittels (20) oder am Pfropfen (10),
- Ziehen des flexiblen elektrischen Leiters (30) über das flexible Zugmittel (20) vom Eingang (14) in Richtung des Ausgangs (18), falls der flexible elektrische Leiter an dem am Eingang (14) befindlichen Teil des flexiblen Zugmittels (20) befestigt wurde, oder vom Ausgang (18) in Richtung des Eingangs (14), falls der flexible elektrische Leiter (30) an dem am Ausgang (18) befindlichen Teil des flexiblen Zugmittels (20) oder am Pfropfen (10) befestigt wurde,
- flächiges Detektieren des Prüfabschnitts des Rohrsystems (10) mittels elektromagnetischer Wechselwirkung des darin verlaufenden flexiblen elektrischen Leiters (30).

2. Verfahren zum Lokalisieren eines hinter einer Oberfläche angeordneten Prüfabschnitts eines wenigstens ein Rohr (12) umfassenden Rohrsystems (10), umfassend:
- Bereitstellen eines Eingangs (14) in das Rohrsystem (10) und eines Ausgangs (16) aus dem Rohrsystem (10),
- Einführen eines in dem Rohrsystem (10) verlagerbaren Pfropfens (10) mit einem daran befestigten, zur Erzeugung oder Aufnahme eines elektromagnetischen Feldes befähigten flexiblen elektrischen Leiters (30) in den Eingang (14), wobei die Länge des flexiblen elektrischen Leiters (30) wenigstens der mutmaßlichen Distanz zwischen dem Eingang (14) und dem Prüfabschnitt entspricht,
- Erzeugen eines Druckgefälles durch Druckbeaufschlagen des zwischen dem Eingang (14) und dem Pfropfen (18) befindlichen Bereichs des Rohrsystems (10) mit einem gasförmigen Medium, und/oder durch Erzeugen eines Unterdrucks in dem zwischen dem Pfropfen (18) und einem Ausgang (16) befindlichen Bereich des Rohrsystems, wodurch der Pfropfen (10) in Richtung eines Ausgangs (16) transportiert wird,
- flächiges Detektieren des Prüfabschnitts des Rohrsystems (10) mittels elektromagnetischer Wechselwirkung des darin verlaufenden flexiblen elektrischen Leiters (30).

3. Verfahren nach einem der Ansprüche 1 bis 2, wobei das flächige Detektieren mittels elektromagnetischer Wechselwirkung erfolgt über
- Erzeugen eines elektromagnetischen Feldes durch Anlegen einer elektrischen Spannung und/oder eines Induktionsstromes an den flexiblen elektrischen Leiter (30),
- Detektieren des erzeugten elektromagnetischen Feldes mittels eines Detektors an wenigstens zwei Positionen.

4. Verfahren nach einem der Ansprüche 1 bis 2, wobei das flächige Detektieren mittels elektromagnetischer Wechselwirkung erfolgt über
- Induzieren einer elektrischen Wechselspannung im flexiblen elektrischen Leiter (30) mittels eines elektromagnetischen Feldes zu unterschiedlichen Zeiten aus wenigstens zwei Positionen,
- Detektieren der jeweils im flexiblen elektrischen Leiter (30) induzierten elektrischen Wechselspannung.

5. Verfahren zum Lokalisieren eines Prüfabschnitts eines wenigstens ein Rohr umfassenden Rohrsystems (10), umfassend:
- Bereitstellen eines Eingangs in das Rohrsystem (10) und eines Ausgangs (16) aus dem Rohrsystem (10),
- Einführen eines eine Sonde umfassenden und in dem Rohrsystem (10) verlagerbaren Pfropfens (10) mit einem daran befestigten flexiblen Zugmittel in den Eingang (14),
- Erzeugen eines Druckgefälles durch Druckbeaufschlagen des zwischen dem Eingang (14) und dem Pfropfen (18) befindlichen Bereichs des Rohrsystems (10) mit einem gasförmigen Medium, und/oder durch Erzeugen eines Unterdrucks in dem zwischen dem Pfropfen (18) und einem Ausgang (16) befindlichen Bereich des Rohrsystems, wodurch der Pfropfen (10) in Richtung eines Ausgangs (16) transportiert wird,
- flächiges Detektieren des Prüfabschnitts des Rohrsystems (10) über eine Ortung der Sonde mittels elektromagnetischer Wechselwirkung.

6. Verfahren nach Anspruch 5, wobei die Sonde eine interne Stromversorgung umfasst, als Transmitter zur Erzeugung eines elektromagnetischen Feldes ausgebildet ist und die Ortung der Sonde über ein Detektieren eines von der Sonde erzeugten elektromagnetischen Feldes erfolgt.

7. Verfahren nach Anspruch 5, wobei die Sonde als Transponder ausgebildet ist und die Ortung der Sonde mittels eines von dem Transponder als Reaktion auf ein Abfragesignal erzeugten elektromagnetischen Feldes erfolgt.

8. Verfahren zum Lokalisieren eines Prüfabschnitts eines wenigstens ein Rohr umfassenden Rohrsystems (10), umfassend:
- Bereitstellen eines Eingangs (14) in das Rohrsystem und eines Ausgangs (16) aus dem Rohrsystem (10),
- Einführen eines eine Sonde umfassenden und in dem Rohrsystem (10) verlagerbaren Pfropfens (18) mit einem zur Stromversorgung der Sonde daran befestigten flexiblen elektrischen Leiter (30) in den Eingang (14),
- Erzeugen eines Druckgefälles durch Druckbeaufschlagen des zwischen dem Eingang (14) und dem Pfropfen (18) befindlichen Bereichs des Rohrsystems (10) mit einem gasförmigen Medium, und/oder durch Erzeugen eines Unterdrucks in dem zwischen dem Pfropfen (18) und einem Ausgang (16) befindlichen Bereich des Rohrsystems, wodurch der Pfropfen (10) in Richtung eines Ausgangs (18) transportiert wird,
- Lokalisieren des Prüfabschnitts des Rohrsystems (10) über eine Ortung der Sonde mittels elektromagnetischer Wechselwirkung.

9. Verfahren nach Anspruch 8, wobei die Sonde entweder als Transmitter zur Erzeugung eines elektromagnetischen Feldes ausgebildet ist und die Ortung der Sonde durch ein Detektieren eines von der Sonde erzeugten elektromagnetischen Feldes erfolgt, oder die Sonde als Transponder ausgebildet ist und die Ortung der Sonde mittels eines von dem Transponder als Reaktion auf ein Abfragesignal erzeugten elektromagnetischen Feldes erfolgt.

10. Verfahren zur Ermittlung wenigstens eines Teilverlaufs eines wenigstens ein Rohr umfassenden Rohrsystems (10) umfassend:
- Lokalisieren eines Prüfabschnitts des Rohrsystems (10) gemäß einem Verfahren der Ansprüche 1 bis 9,
- Lokalisieren wenigstens eines zweiten Prüfabschnitts des Rohrsystems (10) gemäß einem Verfahren der Ansprüche 1 bis 9,
- Bestimmung des Teilverlaufs durch Zusammensetzen der lokalisierten Prüfabschnitte.

11. Verfahren nach einem der Ansprüche 1 bis 10, wobei wenigstens eines der vom Rohrsystem (10) umfassten Rohre (12) aus einem nichtleitenden Material besteht oder eine Oberfläche aus einem nichtleitenden Material aufweist.

12. Anordnung zur Durchführung eines Verfahrens nach einem der Ansprüche 1 bis 11, umfassend:
- einen Pfropfen (10)
- ein an dem Pfropfen (10) befestigtes flexibles Zugmittel (20) oder einen an dem Pfropfen (10) befestigten flexiblen elektrischen Leiter (30).

13. Anordnung nach Anspruch 12, wobei
- die Anordnung weiterhin eine an dem Pfropfen (10) oder an dem flexiblen Zugmittel (20) oder an dem flexiblen elektrischen Leiter (30) befestigte Sonde umfasst, oder
- der Pfropfen (18) eine Sonde umfasst.

14. Anordnung nach einem der Ansprüche 12 bis 13, weiterhin umfassend einen Detektor (34) zum Detektieren eines elektromagnetischen Feldes, und/oder eine Spannungsquelle zum Anlegen einer Spannung an einen elektrischen Leiter (30), und/oder eine Vorrichtung zur Druckbeaufschlagung (28) eines Rohrsystems (10) an dessen Eingang mit einem gasförmigen Medium, und/oder eine Vorrichtung zur Erzeugung eines Unterdrucks an einem Ausgang (16) des Rohrsystems (10).

15. Vorrichtung zur Druckbeaufschlagung (28) nach Anspruch 14, umfassend:
- einen von einem Gehäuse (38) umgebenen Druckmedium-Kanal (42), der mittels eines zwischen einer Ruhestellung und einer Betriebsstellung verlagerbaren Sperrelements (44) in dessen Ruhestellung verschließbar und in der Betriebsstellung von einem mit Druck beaufschlagten gasförmigen Medium durchströmbar ist,
- eine Druckmedium-Düse (36), aus der das mit Druck beaufschlagte gasförmige Medium aus dem Druckmedium-Kanal (42) ausleitbar ist, und
- eine Einleitdüse (50), mittels welcher ein flexibles Zugmittel (20) und/oder ein flexibler elektrischer Leiter (30) in den Druckmedium-Kanal (42) einführbar ist.
